# EUROPEAN PATENT SPECIFICATION

(11) **EP 3 101 172 B1**
(45) Date of publication and mention of the grant of the patent: **17.01.2024**
(21) Application number: 15742525.7
(22) Date of filing: 22.01.2015
(51) Int. Cl.: D06N 3/14, C08G 18/08, D06N 3/00, C08G 18/44, C08G 18/48, C08G 18/76, C08G 18/66, C08G 18/75, C08G 18/79, C08G 18/80

(54) **SHEET-LIKE ARTIFICIAL LEATHER, AND METHOD FOR PRODUCING SAME**
BLATTARTIGES KUNSTLDER UND VERFAHREN ZUR HERSTELLUNG DAVON
CUIR ARTIFICIEL EN FEUILLE ET SON PROCÉDÉ DE FABRICATION

(30) Priority: 30.01.2014 JP 2014015350
(43) Date of publication of application: 07.12.2016
(73) Proprietor: Toray Industries, Inc., Tokyo 103-8666 (JP)
(72) Inventor: MURAHARA, Hisashi, Anpachi-gun Gifu 503-2395 (JP); NAKAI, Shunichoro, Anpachi-gun Gifu 503-2395 (JP); MATSUZAKI, Yukihiro, Anpachi-gun Gifu 503-2395 (JP); NISHIMURA, Makoto, Otsu-shi Shiga 520-8558 (JP)
(74) Representative: Hoefer & Partner Patentanwälte mbB
(86) International application number: PCT/JP2015/051620
(87) International publication number: WO 2015/115290

(56) References cited:
- EP-A1- 0 619 332
- JP-A- S5 679 780
- JP-A- 2002 061 081
- JP-A- 2002 061 081
- JP-A- 2005 213 411
- JP-A- 2006 307 000
- JP-A- 2006 307 000
- JP-A- 2013 083 031
- DATABASE WPI Week 201240 2012 Thomson Scientific, London, GB; AN 2012-D89366 XP002773186, -& CN 102 382 278 A (XUCHUAN CHEM SUZHOU CO LTD) 21 March 2012 (2012-03-21)

## Description

### Technical Field

The present invention relates to eco-conscious sheet materials produced by a process using no organic solvent and methods for producing such sheet materials, and more particularly to a sheet material having a good surface appearance and touch and a method for producing such a sheet material.

### Background Art

Sheet materials composed mainly of fibrous substrates and polyurethane resins, the fibrous substrates being made of fabrics such as nonwoven fabrics, have excellent features that natural leathers do not have, and have been widely used in various applications such as man-made leathers. In particular, sheet materials including polyester fibrous substrates have high light fastness and thus have been increasingly used year by year in applications such as clothing, chair upholstery, and automotive interior materials.

Such sheet materials are produced, typically, by a combined process of impregnating a fibrous substrate with a solution of a polyurethane resin in an organic solvent, and then dipping the fibrous substrate impregnated with polyurethane resin into water or an aqueous organic solvent solution that does not dissolve the polyurethane resin to wet-coagulate the polyurethane resin. In this process, a water-miscible organic solvent, such as *N,N-*dimethylformamide, is used as the organic solvent for the polyurethane resin. Organic solvents, however, are generally very harmful to health and environment, and thus there is a strong need for methods for producing a sheet material using no organic solvent.

To meet the demand, specifically, methods are being studied that use aqueous dispersed type polyurethane resins, which are in the form of a water dispersion of a polyurethane resin containing hydrophilic groups in its molecule, in place of traditional organic-solvent-based polyurethane resins.

However, sheet materials obtained by impregnating a fibrous substrate with an aqueous dispersed type polyurethane resin and coagulating the polyurethane resin tend to have a hard touch. One major reason for this is the difference in coagulation method between the two types of resin. Specifically, organic-solvent-based polyurethane solutions are coagulated by "wet coagulation" in which polyurethane molecules dissolved in an organic solvent are coagulated by replacing the solvent with water. This method forms a less dense porous polyurethane membrane. Thus, when a polyurethane resin is impregnated into a fibrous substrate and coagulated, fibers and the polyurethane resin adhere to each other in dots, which results in a soft sheet material.

By contrast, aqueous dispersed type polyurethane resins are coagulated by "moist-hot coagulation" in which the state of hydration of a polyurethane emulsion in water is destroyed mainly by heating, whereby polyurethane molecules in the emulsion are aggregated. This method forms a nonporous polyurethane membrane with a highly dense structure. As a result, the fibrous substrate and the polyurethane resin adhere closely to each other to firmly hold entangled portions of fibers, which results in a hard touch. To improve the touch resulting from the use of aqueous dispersed type polyurethane, i.e., to reduce the holding of entanglement points of fibers due to polyurethane, techniques for making a polyurethane resin in a fibrous substrate porous have been proposed.

### Prior Art Documents

### Patent Documents

Specifically, it has been proposed that a fibrous substrate in the form of, for example, a sheet made of a fabric such as a nonwoven fabric is provided with an aqueous dispersed type polyurethane solution containing a blowing agent, and the blowing agent is blown by heating to make the polyurethane in the fibrous substrate porous (see Patent Document 1).

Furthermore, a technique has been proposed for providing a soft touch by impregnating a fibrous substrate with a polyurethane resin prepared from a polyol having low crystallinity. The polyol used here is not a polyhexamethylene carbonate diol, which is a crystalline polyol solid at normal temperature, but a polycarbonate polyol made to be an amorphous polyol liquid at normal temperature by copolymerizing a carbonate polyol having a linear structure with a different carbon number (see Patent Document 2).

Patent Document 3 teaches a polyurethane suitable for producing leatherlike sheets, which is prepared by the reaction among a diol (A) having a tertiary amino group, a polymer diol (B) having the number-average molecular weight of 500 to 3,000 and selected from the group consisting of polyesters, polycarbonates, polylactones and polyethers, and an organic diisocyanate (C1) each in such an amount that the equivalent ratio of the NCO groups to the OH groups will range from 0.5 to 0.99 to thereby prepare an intermediate diol (D) substantially terminated by OH groups, followed by the reaction among the diol (D), a low-molecular-weight diol (E) and diphenylmethane 4,4'-diisocyanate (C2); and a leatherlike sheet composed of the polyurethane and a fibrous base material, which is soft to the touch, excellent in durability, and dyeable with acid dyes.

Patent Document 4 discloses a waterborne polyurethane resin and a preparation method and application of the watercraft polyurethane resin. The raw materials except water for preparation include, by weight, 10% to 50% of one or more kinds of aliphatic or aromatic isocyanate compound, 40% to 80% of at least one kind of polyol with the molecular weight ranging from 400 to 5000, 0.5% to 20% of at least one kind of ion or potential type hydrophilic compound, 0.5 % to 10% of at least one kind of low-molecular-weight compound containing hydroxide radical or amino with the molecular weight ranging from 40 to 500, and 0% to 10% of auxiliaries and additive agent. The waterborne polyurethane resin has excellent resistance to hot toluene, and microfibre synthetic leather made by the waterborne polyurethane resin by the waterborne solidifying technology is better in mechanical property and touch.

Patent Document 5 teaches to provide a polyurethane composition flexible and good in durability, a sheet-like product that combines high durability and elegant appearance and feeling by using it, and an interior material using the sheet-like product as a skin material. The sheet-like product consists of a polyurethane composition containing in the molecular chain a carbonate structure and a nonwoven fabric of ultrafine fibers using it as an elastic resin binder. This sheet-like product is suitably used for the interior material as the skin material of furniture, a chair, a wall decoration, a vehicle seat, a vehicle ceiling, a vehicle trim and the like.

Patent Document 6 relates to a sued-like leathery sheet, which is obtained by using a mixture of a polycarbonate polyurethane resin and different from the polycarbonate polyurethane resin a polyurethane resin in at least a part of the polyurethane resins in the sued-like leathery sheet comprising synthetic fibers and the polyurethane resins.
Patent Document 1: JP 2011-214210 A
Patent Document 2: JP 05-43647 A
Patent Document 3: EP 0619332 A1
Patent Document 4: CN 102382278 A
Patent Document 5: JP 2006-307000 A
Patent Document 6: JP 2002-061081 A

### Summary of the Invention

### Problems to be Solved by the Invention

According to the technique in Patent Document 1, making a polyurethane resin porous reduces the area of adhesion of fibers to the polyurethane resin to reduce the holding of entanglement points of the fibers, as a result of which a sheet material having a soft texture and a good touch can be produced, but its softness tends to be lower than in the case where an organic-solvent-based polyurethane is used.

According to the technique in Patent Document 2, impregnating a fibrous substrate with a polyurethane resin prepared from the above-described amorphous polycarbonate polyol provides a softer touch than in the case of a polyurethane resin prepared from a crystalline polycarbonate polyol, but its softness tends to be lower than in the case where an organic-solvent-based polyurethane is used.

In view of the above-described background of the related art, it is an object of the present invention to provide a sheet material that is produced through an eco-conscious production process and yet has such uniformity that is comparable to those of man-made leathers produced using organic-solvent-based polyurethanes, an elegant surface appearance, and a good touch, and a method for producing such a sheet material.

### Means for Solving the Problems

The present inventors focused on molecular structures of polyurethane resins, which have not been focused in the related art, i.e., microphase-separated structures including hard segment domains (HS domains), which are composed mainly of urethane bonds and urea bonds, and soft segment domains (SS domains), which are composed mainly of polymeric polyols, and discovered such important properties that a polyurethane resin, when applied to a fibrous substrate, provides a good touch.

To solve the problems described above, a sheet material of the present invention has the following structure (1):
(1) A sheet material comprising a fibrous substrate comprising microfibers; and a hydrophilic-group-containing polyurethane resin comprising an aromatic polyisocyanate, wherein the hydrophilic-group-containing polyurethane resin is a polyurethane resin crosslinked with a crosslinking agent applied to the fibrous substrate, the hydrophilic-group-containing polyurethane resin having a microphase-separated structure consisting in hard segment domains composed mainly of urethane bonds and urea bonds and soft segment domains composed mainly of polymeric polyols.

A method for producing the sheet material of the present invention has the following structure:
A method for producing the above sheet material, including impregnating a dispersion into a fibrous substrate comprising microfibers, the dispersion comprising a crosslinking agent and an aqueous dispersed type polyurethane resin comprising an aromatic polyisocyanate and coagulating the dispersion by heat drying.

In the sheet material of the present invention, the crosslinking agent is at least one of a polyisocyanate crosslinking agent and a carbodiimide crosslinking agent.

In the sheet material of the present invention, the hydrophilic-group-containing resin applied to the fibrous substrate is preferably an aqueous dispersed type polyurethane resin.

In the method for producing the sheet material of the present invention, the crosslinking agent is at least one of a polyisocyanate crosslinking agent and a carbodiimide crosslinking agent.

The method for producing the sheet material of the present invention preferably further includes heating the impregnated and coagulated dispersion at 80°C to 200°C after the dispersion is impregnated and coagulated by heat drying.

The method for producing the sheet material of the present invention preferably further includes applying a highly saponified polyvinyl alcohol having a degree of saponification of 95% to 100% to the fibrous substrate made of microfibers before the dispersion is impregnated and coagulated.

### Effects of the Invention

The present invention provides a sheet material that is produced through an eco-conscious production process using a hydrophilic-group-containing polyurethane resin comprising an aromatic polyisocyanate and yet has such a uniform nap length that is comparable to those of man-made leathers produced using organic-solvent-based polyurethanes, an elegant surface appearance with very fine fibers, and such a good touch that is soft and excellent in wrinkle recovery. In particular, the sheet material of the present invention achieves a touch without a paper-like feel but with a highly rubberlike feel that is comparable to those of man-made leathers produced using organic-solvent-based polyurethanes, which could not be achieved by the conventional use of an aqueous dispersed type polyurethane.

### Brief Description of the Drawing

FIG. 1 is an AFM micrograph of the microphase-separated structure of the polyurethane extracted from the man-made leather obtained in Example 8 of the present invention;
FIG. 2 is an AFM micrograph of the microphase-separated structure of the polyurethane extracted from the man-made leather obtained in Example 15 of the present invention; and
FIG. 3 is an AFM micrograph of the microphase-separated structure of the polyurethane extracted from the man-made leather obtained in Comparative Example 2.

### Mode for Carrying Out the Invention

### Sheet Material

The sheet material of the present invention will now be described.

The sheet material of the present invention includes a fibrous substrate (e.g., a nonwoven fabric) made of microfibers, and a hydrophilic-group-containing resin acting as a binder applied to the fibrous substrate.

Examples of the fibers constituting the fibrous substrate include fibers made of polyesters such as polyethylene terephthalate, polybutylene terephthalate, polytrimethylene terephthalate, and polylactide; polyamides such as 6-nylon and 66-nylon; and melt-spinnable thermoplastic resins such as acryl, polyethylene, polypropylene, and thermoplastic cellulose. Of these, polyester fibers are suitable for use in terms of strength, dimensional stability, and light fastness. The fibrous substrate may be made of mixed fibers of different materials.

The cross-sectional shape of the microfibers may be circular. Alternatively, microfibers having oval, polygonal (e.g., flat, triangular), or modified (e.g., fan-shaped, cross-shaped) cross-sections may be used.

The average filament diameter of the microfibers constituting the fibrous substrate is preferably 0.1 to 7 µm. The average filament diameter is preferably 7 µm or less, more preferably 6 µm or less, and still more preferably 5 µm or less. An average filament diameter in this range provides a sheet material with excellent softness and raising quality. The average filament diameter is preferably 0.3 µm or more, more preferably 0.7 µm or more, and still more preferably 1 µm or more. An average filament diameter in this range provides excellent post-dyeing color-developing properties and excellent dispersibility of bundled fibers in raising, such as buffing with sandpaper or other abrasive material.

The fibrous substrate made of microfibers may be in the form of a fabric such as a woven, knitted, or nonwoven fabric. Of these, a nonwoven fabric is suitable for use because it provides a sheet material that has a good surface appearance when napped.

The nonwoven fabric may be a short-fiber nonwoven fabric or a long-fiber nonwoven fabric but is preferably a short-fiber nonwoven fabric in terms of a touch and appearance.

The fiber length of short fibers in the short-fiber nonwoven fabric is preferably 25 mm to 90 mm, more preferably 35 mm to 75 mm. A fiber length of 25 mm or more allows for entanglement to provide a sheet material with high abrasion resistance. A fiber length of 90 mm or less provides a sheet material with a more excellent touch and appearance.

When the fibrous substrate made of microfibers is a nonwoven fabric, the nonwoven fabric preferably has a structure in which bundles of microfibers (fiber bundles) are entangled with each other. The entanglement of bundled microfibers provides a sheet material with increased strength. The nonwoven fabric having such a structure can be produced by entangling microfiber-developing fibers with each other in advance and then developing microfibers.

When the nonwoven fabric is made of microfibers or microfiber bundles, a woven fabric or knitted fabric can be inserted into the nonwoven fabric in order, for example, to increase its strength. The average filament diameter of fibers constituting such a woven fabric or knitted fabric is preferably about 0.1 to 10 µm.

Tthe hydrophilic-group-containing resin used as a binder in the sheet material of the present invention is an aqueous dispersed type urethane resins comprising an aromatic polyisocyanate in terms of a touch.

Preferred polyurethane resins are resins produced by the reaction of a polymeric polyol preferably having a number average molecular weight of 500 to 5,000, an organic polyisocyanate, and a chain extender. To increase the stability of an aqueous dispersed type polyurethane dispersion, a compound containing an active hydrogen component having a hydrophilic group is used in combination. A polymeric polyol having a number average molecular weight of 500 or more, more preferably 1,500 or more, prevents a hard touch, whereas a polymeric polyol having a number average molecular weight of 5,000 or less, more preferably 4,000 or less, enables the strength of a polyurethane resin acting as a binder to be maintained.

Among such polymeric polyols, polyether polyols include polyols produced by addition polymerization of, for example, ethylene oxide, propylene oxide, butylene oxide, styrene oxide, tetrahydrofuran, epichlorohydrin, and cyclohexylene monomers using a polyhydric alcohol or a polyamine as an initiator; and polyols produced by ring opening polymerization of these monomers in the presence of a catalyst such as a proton acid, a Lewis acid, or a cation catalyst. Specific examples include polyethylene glycol, polypropylene glycol, polytetramethylene glycol, and copolyols thereof.

Examples of polyester polyols include polyester polyols produced by condensing one or more low-molecular-weight polyols and polybasic acids and polyester polyols produced by opening polymerization of lactones.

Examples of low-molecular-weight polyols include linear alkylene glycols such as ethylene glycol, 1,3-propylene glycol, 1,4-butanediol, 1,5-pentanediol, 1,6-hexanediol, 1,7-heptanediol, 1,8-octanediol, 1,9-nonanediol, and 1,10-decanediol; branched alkylene glycols such as neopentyl glycol, 3-methyl-1,5-pentanediol, 2,4-diethyl-1,5-pentanediol, and 2-methyl-1,8-octanediol; alicyclic diols such as 1,4-cyclohexanediol; and aromatic dihydric alcohols such as 1,4-bis(β-hydroxyethoxy)benzene. These may be used alone or in combination. Adducts produced by adding various alkylene oxides to bisphenol A may also be used.

Examples of polybasic acids include succinic acid, maleic acid, adipic acid, glutaric acid, pimelic acid, suberic acid, azelaic acid, sebacic acid, dodecanedicarboxylic acid, phthalic acid, isophthalic acid, terephthalic acid, and hexahydroisophthalic acid. These may be used alone or in combination.

Examples of polylactone polyols include polyols produced by ring opening polymerization of lactones such as γ-butyrolactone, γ-valerolactone, and ε-caprolactone alone or in combination using a polyhydric alcohol as an initiator.

Examples of polycarbonate polyols include compounds produced by the reaction between polyols and carbonate compounds such as dialkyl carbonates and diaryl carbonates.

Examples of polyols for use as starting materials of polycarbonate polyols include polyols listed as starting materials of polyester polyols. Examples of dialkyl carbonates include dimethyl carbonate and diethyl carbonate, and examples of diaryl carbonates include diphenyl carbonate.

For the hydrophilic-group-containing resin for use in the present invention, a nonlimiting example of the component for incorporating a hydrophilic group into the resin is a hydrophilic-group-containing active hydrogen component. Examples of the hydrophilic-group-containing active hydrogen component include compounds containing active hydrogen and at least one of a nonionic group, an anionic group, and a cationic group. Examples of the compound having a nonionic group and active hydrogen include compounds containing two or more active hydrogen components or two or more isocyanate groups and having, for example, a pendant polyoxyethylene glycol group with a molecular weight of 250 to 9,000, and triols such as trimethylolpropane and trimethylolbutane.

Examples of the compound having an anionic group and active hydrogen include carboxyl-group-containing compounds such as 2,2-dimethylolpropionic acid, 2,2-dimethylol butane acid, and 2,2-dimethylolvaleric acid, and derivatives thereof; sulfo-group-containing compounds such as 1,3-phenylenediamine-4,6-disulfonic acid and 3-(2,3-dihydroxypropoxy)-1-propanesulfonic acid, and derivatives thereof; and salts of these compounds obtained by neutralization with a neutralizer.

Examples of the compound containing a cationic group and active hydrogen include tertiary-amino-group-containing compounds such as 3-dimethylaminopropanol, *N-*methyldiethanolamine, and N-propyldiethanolamine, and derivatives thereof.

The hydrophilic-group-containing active hydrogen components listed above can be used in the form of salts obtained by neutralization with a neutralizer.

To provide a polyurethane resin with mechanical strength and dispersion stability, the hydrophilic-group-containing active hydrogen component in polyurethane molecules is preferably 2,2-dimethylolpropionic acid, 2,2-dimethylolbutanoic acid, or a neutralized salt thereof.

Introducing the above-described hydrophilic-group-containing active hydrogen components, in particular, hydroxyl groups, sulfo groups, and carboxyl groups, into a polyurethane resin may increase the hydrophilicity of polyurethane molecules. In addition, using a crosslinking agent described below in combination may form a three-dimensional crosslinked structure in the polyurethane molecules to improve physical properties. Thus, it is preferable to produce a polyurethane resin using appropriate components selected from the above-described hydrophilic-group-containing active hydrogen components.

Examples of chain extenders include compounds conventionally used to produce polyurethane resins. Particularly preferred are low-molecular-weight compounds with molecular weights of 600 or less having two or more active hydrogen atoms reactive with isocyanate groups in their molecules. Specific examples include diols such as ethylene glycol, propylene glycol, 1,4-butanediol, 1,6-hexanediol, 3-methyl-1,5-pentanediol, neopentyl glycol, 1,4-cyclohexanediol, and xylylene diglycol; triols such as trimethylolpropane and trimethylolbutane; diamines such as hydrazine, ethylenediamine, isophoronediamine, piperazine, 4,4'-methylenedianiline, tolylenediamine, xylylenediamine, hexamethylenediamine, and 4,4'-dicyclohexylmethanediamine; triamines such as diethylenetriamine; and amino alcohols such as aminoethyl alcohol and aminopropyl alcohol.

Examples of organic polyisocyanates used according to the present invention are aromatic/aliphatic diisocyanates such as xylylene diisocyanate (hereinafter also referred to as XDI for short) and tetramethyl-m-xylylene diisocyanate; and aromatic diisocyanates such as tolylene diisocyanate (hereinafter also referred to as TDI for short), 4,4'-diphenylmethane diisocyanate (hereinafter also referred to as MDI for short), tolidine diisocyanate, and naphthalene diisocyanate (hereinafter also referred to as NDI for short).

In producing a polyurethane resin, the polyisocyanates listed above can be used alone in combination. In particular, aromatic polyisocyanates, such as TDI, MDI, NDI, and XDI, are more suitable for use because the resonance of π electrons in molecules facilitates the aggregation of HS domains to form a well-defined microphase-separated structure.

Introducing sulfonic groups, carboxyl groups, hydroxyl groups, or primary or secondary amino groups into the polyurethane resin for use in the present invention and incorporating crosslinking agents reactive with these functional groups into a dispersion of the polyurethane can increase the molecular weight and crosslink density of the resin after reaction to enhance durability, weather resistance, heat resistance, and wet strength retention.

Crosslinking agents having in their molecules two or more reactive groups reactive with a reactive group introduced into the polyurethane resin can be used. Specific examples include polyisocyanate crosslinking agents such as water-soluble isocyanate compounds and blocked isocyanate compounds, and carbodiimide crosslinking agents. These crosslinking agents may be used alone or in combination.

Water-soluble isocyanate compounds have two or more isocyanate groups in their molecules, and examples include compounds containing the organic polyisocyanates listed above. Examples of commercially available products thereof include "Bayhydur" (registered trademark) series and "Desmodur" (registered trademark) series available from Bayer-Material Science.

Block isocyanate compounds have two or more blocked isocyanate groups in their molecules. The term "blocked isocyanate group" refers to a group obtained by blocking any one of the organic polyisocyanate compounds listed above with a blocking agent, such as an alcohol, amine, phenol, imine, mercaptan, pyrazole, oxime, or active methylene. Examples of commercially available products thereof include "Erastron" (registered trademark) series available from Dai-ichi Kogyo Seiyaku, "Duranate" (registered trademark) series available from ASAHI KASEI CHEMICALS, and "TAKENATE" (registered trademark) series available from Mitsui Chemicals, Inc.

Examples of melamine crosslinking agents (not used according to the present invention) include compounds having two or more methylol groups or methoxymethylol groups in their molecules. Examples of commercially available products thereof include "U-VAN" (registered trademark) series available from Mitsui Chemicals, Inc., "Cymel" (registered trademark) series available from Nihon Cytec, Inc., and "Sumimal" (registered trademark) series available from Sumitomo Chemical Co., Ltd.

Examples of oxazoline crosslinking agents (not used according to the present invention) include compounds having two or more oxazoline groups (an oxazoline backbone) in their molecules. Examples of commercially available products thereof include "EPOCROS" (registered trademark) series available from Nippon Shokubai Co., Ltd. Examples of carbodiimide crosslinking agents include compounds having two or more carbodiimide groups in their molecules. Examples of commercially available products thereof include "Carbodilite" (registered trademark) series available from Nisshinbo Industries, Inc. Examples of aziridine crosslinking agents (not used according to the present invention) include compounds having two or more aziridinyl groups in their molecules. Examples of hydrazine crosslinking agents (not used according to the present invention) include hydrazine and compounds having two or more hydrazine groups (a hydrazine backbone) in their molecules.

Preferred functional groups that the polyurethane resin should have are hydroxyl groups and/or carboxyl groups and/or sulfonic groups, and the crosslinking agents are polyisocyanate crosslinking agents and carbodiimide compounds. The combined use of a carbodiimide compound and a polyisocyanate crosslinking agent can further strengthen the crosslinked structure of the polyurethane resin and improve moist-heat resistance while maintaining softness.

Aqueous dispersed type polyurethane resins typically contain hydrophilic groups in their molecular structures and thus have higher affinity for water molecules than traditional organic-solvent-based polyurethane resins. Thus, in a wet environment, the aqueous dispersed type polyurethane resins tend to swell and loosen their molecular structures to lose their high physical properties that could have been maintained in a dry environment. However, adding the crosslinking agents listed above can improve moist-heat resistance to increase the wet tensile strength of a sheet. As a result, structural changes of polyurethane molecules due to water in a dyeing process or other processes can be prevented or reduced, and the shape stability of a sheet and the adhesion of a polyurethane resin to a fibrous substrate can be maintained. Thus, high physical properties and a uniform appearance can be achieved.

Carbodiimide crosslinking agents have high crosslinking reactivity even at low temperatures of 100°C or lower and thus are suitable for use in terms of productivity. Isocyanate compounds and/or blocked isocyanate compounds react mainly with hydroxyl groups and, at a high temperature, in particular, 120°C to 200°C, preferably 140°C to 200°C, become more reactive with urethane bonds and/or urea bonds constituting HS domains of a polyurethane resin to form allophanate bonds and/or biuret bonds. These bonds provide a stronger crosslinked structure to provide the polyurethane resin with a well-defined microphase-separated structure.

The polyurethane resin of the present invention in the form of a film preferably has a storage elastic modulus E' at 20°C of 1 to 100 MPa, more preferably 2 to 50 MPa, in terms of softness and impact resilience. The polyurethane resin film preferably has a loss elastic modulus of 0.1 MPa to 20 MPa, more preferably 0.5 MPa to 12MPa, and preferably has a tanδ of 0.01 to 0.4, more preferably 0.02 to 0.35.

The values of storage elastic modulus E' and tanδ in the present invention were determined using a polyurethane resin film having a thickness of 200 µm with a DMA7100 storage elastic modulus measurement apparatus (Hitachi High-Tech Science Corporation) at a frequency of 12 Hz. Tanδ is represented by E"/E' (E" is a loss elastic modulus). E' represents elastic properties of a polyurethane resin. An excessively small E' results in a sheet having poor wrinkle recovery, and an excessively large E' results in a sheet having a hard touch. E" is a loss elastic modulus, which represents viscous properties. Similarly to E', an excessively small E" results in a sheet having poor wrinkle recovery, and an excessively large E" results in a sheet having a hard touch.

Tanδ, represented by E"/E', is a ratio of the viscous properties to the elastic properties of a polyurethane resin. An excessively small tanδ, similarly to E', results in a sheet having poor wrinkle recovery, and an excessively large tanδ results in a sheet having a hard touch.

The sheet material of the present invention preferably has a density of 0.2 to 0.7 g/cm³. The density is more preferably 0.2 g/cm³ or more, still more preferably 0.25 g/cm³ or more. A density in this range leads to a fine surface appearance and develops a luxurious appearance. The density of the sheet material is preferably 0.7 g/cm³ or less, more preferably 0.6 g/cm³ or less. A density in this range prevents the sheet material from having a hard touch.

The proportion of a polyurethane resin in the sheet material of the present invention is preferably 10 to 80% by mass. Not less than 10% by mass, more preferably not less than 15% by mass, of a polyurethane resin provides sheet strength and also prevents fibers from falling off. Not more than 80% by mass, more preferably not more than 70% by mass, of a polyurethane resin prevents a hard touch and provides good raising quality.

The sheet material of the present invention is a sheet material provided with a uniform appearance, elegant surface appearance, and good touch and durability by impregnating a fibrous substrate with a hydrophilic-group-containing resin (a polyurethane resin) having specific properties.

Thus, the present invention aims to achieve the object described above, and the sheet material of the present invention is a sheet material including a fibrous substrate made of microfibers and a hydrophilic-group-containing resin applied to the fibrous substrate, the hydrophilic-group-containing resin having a microphase-separated structure.

According to the sheet material of the present invention, the hydrophilic-group-containing resin is a polyurethane resin comprising an aromatic polyisocyanate.

### Method for Producing Sheet Material

A method for producing the sheet material of the present invention will now be described.

The fibrous substrate for use in the present invention is preferably a fabric such as a woven, knitted, or nonwoven fabric. Of these, a nonwoven fabric is suitable for use because it provides a sheet material that has a good surface appearance when napped. The fibrous substrate of the present invention may optionally be a laminate of these fabrics such as a woven, knitted, and nonwoven fabric.

The nonwoven fabric for use in the present invention may be a short-fiber nonwoven fabric or a long-fiber nonwoven fabric but is preferably a short-fiber nonwoven fabric to provide a surface appearance having a uniform nap length.

The fiber length of short fibers in the short-fiber nonwoven fabric is preferably 25 mm to 90 mm, more preferably 35 mm to 75 mm. A fiber length of 25 mm or more allows for entanglement to provide a sheet material with high abrasion resistance. A fiber length of 90 mm or less provides a sheet material with more excellent appearance.

Examples of the fibers constituting the fibrous substrate include fibers made of polyesters such as polyethylene terephthalate, polybutylene terephthalate, polytrimethylene terephthalate, and polylactide; polyamides such as 6-nylon and 66-nylon; and melt-spinnable thermoplastic resins such as acryl, polyethylene, polypropylene, and thermoplastic cellulose. Of these, polyester fibers are suitable for use in terms of strength, dimensional stability, and light fastness. The fibrous substrate may be made of mixed fibers of different materials.

The cross-sectional shape of the fiber for use in the present invention may be circular. Alternatively, microfibers having oval, polygonal (e.g., flat, triangular), or modified (e.g., fan-shaped, cross-shaped) cross-sections may be used.

The average fiber diameter of the fibers constituting the fibrous substrate is preferably 0.1 to 7 µm, more preferably 0.3 to 5 µm. An average fiber diameter of 7 µm or less softens the texture of the fibrous substrate. An average fiber diameter of 0.1 µm or more provides more excellent post-dyeing color-developing properties.

In the present invention, when the fibrous substrate is a nonwoven fabric, a woven fabric or knitted fabric can be combined with the nonwoven fabric for an increase in strength and other purposes. For the form of the combination of a nonwoven fabric with a woven fabric or knitted fabric, the woven fabric or knitted fabric may be laminated on the nonwoven fabric or inserted into the nonwoven fabric. In particular, using a woven fabric is preferred because it can improve shape stability and strength.

Examples of single yarns (warp and weft) of the woven fabric or knitted fabric include single yarns made of synthetic fibers, such as polyester fibers and polyamide fibers. In terms of color fastness, preferred is the same material as microfibers constituting the fabric such as a nonwoven fabric in the end.

Examples of the form of such single yarns include filament yarns and spun yarns, and hard twist yarns of such yarns are suitable for use. Filament yarns are more suitable for use because spun yarns may give rise to falling off of surface fuzz.

When a hard twist yarn is used, the number of twists is preferably 1,000 T/m to 4,000 T/m, more preferably 1,500 T/m to 3,500 T/m. Twists in this preferred range causes little breakage of filaments of the hard twist yarn during needle punching, no reduction in physical properties of products, and no increase in exposure of filaments on a product surface. In addition, twists in this preferred range causes no excessive hardening of the hard twist yarn of the woven fabric or knitted fabric, and thus no hardened touch.

In the present invention, it is preferable to use microfiber-developing fibers for the fibrous substrate. Through the use of microfiber-developing fibers for the fibrous substrate, the entanglement of microfiber bundles described above can be stably created.

When the fibrous substrate is a nonwoven fabric, the nonwoven fabric preferably has a structure in which bundles of microfibers (fiber bundles) are entangled with each other. The entanglement of bundled microfibers provides a sheet material with increased strength. The nonwoven fabric having such a structure can be produced by entangling microfiber-developing fibers with each other in advance and then developing microfibers.

Examples of microfiber-developing fibers include sea-island type conjugated fibers, which are composed of a sea component and an island component made of thermoplastic resins having different solvent solubilities, which sea component is to be dissolved away using, for example, a solvent to leave the island component in the form of microfibers; and peel type conjugated fibers, which are composed of two thermoplastic resins disposed alternately in a radial or layered manner in a fiber cross-section, which two components are to be peeled apart to form microfibers.

In terms of the softness and touch of sheet materials, sea-island type conjugated fibers are preferred because appropriate space can be provided between the island component portions, i.e., microfibers by removing the sea component.

Examples of sea-island type conjugated fibers include sea-island type conjugated fibers produced by spinning alternately arranged two components, a sea component and an island component, using a sea-island type conjugating spinneret; and mix-spun fibers produced by spinning a mixture of two components, a sea component and an island component. Sea-island type conjugated fibers are preferred because they develop into microfibers having a uniform fineness and microfibers having so sufficient length that contributes to the strength of sheet materials.

Examples of the sea component of the sea-island type conjugated fibers include polyethylenes, polypropylenes, polystyrenes, copolyesters of, for example, sodium sulfoisophthalate and polyethylene glycol, polylactic acids, and polyvinyl alcohols. Of these, preferred are copolyesters of, for example, sodium sulfoisophthalate and polyethylene glycol and polylactic acids, which are alkali-labile and can be decomposed without using an organic solvent, and polyvinyl alcohols, which are hot-water soluble.

For the ratio of the sea component to the island component in the sea-island type conjugated fibers, the mass ratio of island fibers to the sea-island type conjugated fiber is preferably 0.2 to 0.9, more preferably 0.3 to 0.8. A mass ratio of the island component to the sea component of 0.2 or greater leads to a reduced removal of the sea component, leading to higher productivity. A mass ratio of 0.9 or less leads to improved dispersibility of island fibers and prevents the island component portions from uniting with each other. The number of islands can be appropriately controlled by spinneret design.

In the microfiber-developing fibers, such as sea-island type conjugated fibers, the major axis of filaments is preferably 5 to 80 µm, more preferably 10 to 50 µm. A filament fineness in this preferred range prevents excessively weak fibers, causing little filament breakage during treatments such as needle punching described below, and, at the same time, enables efficient entanglement in treatments such as needle punching.

The nonwoven fabric for use as a fibrous substrate in the present invention can be produced, for example, by entanglement of fiber webs by needle punching or waterjet punching, spunbonding, meltblowing, and papermaking. Of these, methods involving a treatment such as needle punching or water-jet punching are suitable for use to create the microfiber bundle configuration described above.

For the lamination of the nonwoven fabric and the woven fabric or knitted fabric for use as a fibrous substrate, needle punching and water-jet punching are suitable for use in terms of the entanglement properties of fibers. Of these, needle punching, which is not restricted by sheet thickness and enables orientation of fibers in the vertical direction of the fibrous substrate, is suitable for use.

Preferably, needles used for needle punching each have one to nine barbs. Having at least one barb enables efficient entanglement of fibers. Having up to nine barbs prevents or minimizes fiber damage and leaves no needle holes, which might result in a product having a poor appearance, on the fibrous substrate.

When the nonwoven fabric and the woven fabric or knitted fabric are entangled together, the nonwoven fabric is preferably preliminarily entangled in order to minimize the wrinkling during the integration of the nonwoven fabric and the woven fabric or knitted fabric by needle punching. Such preliminary entanglement by needle punching is effective when carried out at a punch density of 20 punches/cm² or more. The preliminary entanglement is preferably carried out at a punch density of 100 punches/cm² or more, more preferably 300 punches/cm² to 1,300 punches/cm².

A punch density in the preliminary entanglement in the above preferred range is less likely to cause wrinkles in the woven fabric or knitted fabric even if there are some variations in width, resulting in a flat fibrous substrate. The punch density in this range also prevents excessive entanglement of the nonwoven fabric itself to secure room for movement sufficient for entanglement with fibers constituting the woven fabric or knitted fabric, as a result of which an integral structure in which the nonwoven fabric and the woven fabric or knitted fabric are firmly entangled can be advantageously achieved.

In the present invention, when fibers are entangled by needle punching, the punch density is preferably in the range of 300 punches/cm² to 6,000 punches/cm², more preferably 1,000 punches/cm² to 3,000 punches/cm², regardless of the presence of the woven fabric or knitted fabric.

The nonwoven fabric and the woven fabric or knitted fabric may be entangled to form a fibrous substrate in such a manner that fibers are entangled with each other by needle punching with the woven fabric or knitted fabric laminated on one or both surfaces of the nonwoven fabric or with the woven fabric or knitted fabric sandwiched between a plurality of nonwoven fabrics.

Water-jet punching is preferably carried out using water in the form of a columnar stream. Specifically, it is preferable to squirt water from a nozzle with a diameter of 0.05 to 1.0 mm under a pressure of 1 to 60 MPa.

The nonwoven fabric made of microfiber-developing fibers that has been subjected to needle punching or water-jet punching preferably has an apparent density of 0.130 to 0.450 g/cm³, more preferably 0.150 to 0.300 g/cm³. An apparent density of 0.130 g/cm³ or more provides a man-made leather with sufficient shape stability and dimensional stability. An apparent density of 0.450 g/cm³ or less secures a space sufficient for providing an elastic polymer.

The fibrous substrate preferably has a thickness of 0.3 mm to 6.0 mm, more preferably 1.0 mm to 3.0 mm. A thickness of the fibrous substrate in this preferred range provides a sheet with high shape stability and, in addition, is less likely to cause needles to break during needle punching.

To achieve fineness, the nonwoven fabric thus obtained made of microfiber-developing fibers is preferably shrunk by dry heat or wet heat, or both, for further densification.

When sea-island type conjugated fibers are used, dissolution for removing a sea component of the fibers may be carried out before or/and after a dispersion containing an aqueous dispersed type polyurethane resin is applied to a fibrous substrate. Dissolution before application of a dispersion tends to form a structure in which the polyurethane resin is in direct contact with microfibers. This structure enables the microfibers to be firmly held, thus providing a sheet material with good abrasion resistance.

Alternatively, before a dispersion of a polyurethane resin composition is applied to the fibrous substrate made of microfibers, an inhibitor for inhibiting the adhesion of the fibrous substrate to polyurethane, such as a cellulose derivative or a polyvinyl alcohol (hereinafter also referred to as PVA for short), may be applied. This can reduce the adhesion of the microfibers to the polyurethane resin to achieve a soft touch. The inhibitor may be applied before or after the dissolution of the fibers having a sea-island structure. Application before the dissolution increases the shape retention of the fibrous substrate, which enables stable processing into a thin sheet even if the sheet has a low tensile strength due to a reduced fiber unit weight. The application before the dissolution also increases the thickness retention of the fibrous substrate during the dissolution process and, therefore, inhibits densification of the fibrous substrate.

By contrast, application of the inhibitor after the dissolution densifies the fibrous substrate. Thus, the timing of the application is preferably selected as appropriate depending on the intended use. Examples of suitable inhibitors include PVAs, which effectively reinforce the fibrous substrate and are less soluble in water. Among PVAs, highly saponified PVAs, which are even less soluble in water, are more preferred because these inhibitors are less soluble during the application of a PU resin composition and further inhibit the adhesion of microfibers to polyurethane.

The degree of saponification of a highly saponified PVA is preferably 95% to 100%, more preferably 98% to 100%. A degree of saponification of 95% or more inhibits dissolution during the application of a polyurethane resin composition.

The degree of polymerization is preferably 500 to 3,500, more preferably 500 to 2,000. A degree of polymerization of not less than 500 inhibits dissolution of the highly saponified PVA during the application of a polyurethane resin composition. A degree of polymerization of not more than 3,500 prevents an excessive increase in viscosity of a solution of the highly saponified PVA, which allows for stable application of the highly saponified PVA to the fibrous substrate.

The amount of PVA applied is preferably 0.1% by mass to 80% by mass, more preferably 5% by mass to 60% by mass, based on the fibrous substrate that will remain in a product. Applying a highly saponified PVA in an amount of 0.1% by mass or more increases the shape stability during the dissolution process and prevents inadhesion of microfibers to polyurethane. Applying a highly saponified PVA in an amount of 80% by mass or less prevents an excessive decrease in adhesion of microfibers to polyurethane and provides uniform napped fibers, leading to a product having a uniform surface appearance.

To apply the inhibitor uniformly to the fibrous substrate, the inhibitor is preferably applied in such a manner that the fibrous substrate is impregnated with an aqueous solution of the inhibitor and dried by heating. The drying is preferably carried out at 80°C to 180°C, more preferably 110°C to 160°C. Drying at a temperature in this preferred range does not require an excessively long time and, in addition, prevents the inhibitor from being insolubilized to be incapable of being dissolved away later. The drying is preferably carried out for 1 to 30 minutes in terms of processability.

The inhibitor is preferably dissolved away by dipping the fibrous substrate provided with the inhibitor into steam at 100°C or higher and hot water at 60°C to 100°C and, optionally, nipping the fibrous substrate, for example, with a mangle.

The dissolution can be carried out by dipping the fibrous substrate containing sea-island type conjugated fibers into a solution and nipping the fibrous substrate. Examples of the solvent for dissolving the sea component include organic solvents such as toluene and trichloroethylene (in the case where the sea component is polyethylene, polypropylene, or polystyrene), alkaline solutions such as an aqueous solution of sodium hydroxide (in the case where the sea component is a copolyester or polylactic acid), and hot water (in the case where the sea component is polyvinyl alcohol).

Polyurethane resins will now be described.

When a polyurethane resin is dispersed into an aqueous medium in the form of particles, in terms of dispersion stability, it is preferable to use, as a component of the polyurethane resin, the above-described hydrophilic-group-containing active hydrogen component, more preferably, a neutralized salt thereof.

Examples of neutralizers used for the neutralized salt of the compound having hydrophilic groups and active hydrogen include amine compounds such as trimethylamine, triethylamine, and triethanolamine, and hydroxides such as sodium hydroxide and potassium hydroxide.

The neutralizer used for the hydrophilic-group-containing active hydrogen component may be added at any timing, for example, before or after polyurethane polymerization or before or after dispersion into an aqueous medium. In terms of the stability of the polyurethane resin in the aqueous dispersion, the component is preferably added before or during dispersion into an aqueous medium.

The amount of hydrophilic-group-containing active hydrogen component and/or salt thereof based on the mass of the polyurethane resin is preferably 0.005 to 30% by mass, more preferably 0.01 to 15% by mass, in terms of dispersion stability and water resistance of the polyurethane resin.

When a polyurethane resin is dispersed into an aqueous medium in the form of particles, in addition to using the above-described hydrophilic-group-containing active hydrogen component, one or more surfactants that serve as external emulsifiers for the polyurethane resin may be used to disperse the polyurethane resin into an aqueous medium.

Examples of surfactants include nonionic surfactants, anionic surfactants, cationic surfactants, and amphoteric surfactants. These surfactants may be used alone or in combination.

Examples of nonionic surfactants include alkylene oxide adduct type nonionic surfactants, such as polyoxyethylene nonylphenyl ether, polyoxyethylene dinonylphenyl ether, polyoxyethylene lauryl ether, and polyoxyethylene stearyl ether; and polyhydric alcohol type nonionic surfactants, such as glycerol monostearate.

Examples of anionic surfactants include carboxylic acid salts, sulfuric acid ester salts, sulfonic acid salts, and phosphoric acid ester salts, such as sodium laurate, sodium lauryl sulfate, ammonium lauryl sulfate, dodecyl sodium benzene sulfonate, and higher alcohol sodium diphosphate.

Examples of cationic surfactants include quarternary ammonium salts, such as distearyl dimethyl ammonium chloride. Examples of amphoteric surfactants include lauryl amino methyl propionate, lauryl dimethyl betaine, and coconut oil fatty acid amide propyl dimethyl amino betaine acetate.

The dispersion containing a polyurethane resin for use in the present invention can be produced by any conventional method for producing a polyurethane dispersion. Examples include a method including reacting the above-described polyisocyanate, polyol, chain extender, and/or hydrophilic-group-containing polyol, and emulsifying the resulting liquid polymer in water in the presence of an emulsifier; a method including reacting the above-described polyisocyanate, polyol, and/or chain extender, and/or hydrophilic-group-containing polyol to produce a prepolymer having isocyanate end groups, and emulsifying the prepolymer in water in the presence of an emulsifier, while (or followed by) adding a chain extender to complete extension reaction; and a method including reacting the above-described polyisocyanate, polyol, and/or chain extender, and/or hydrophilic-group-containing polyol, and then emulsifying the reaction product in water without using an emulsifier. The polymerization of the prepolymer and the polymerization without forming a prepolymer may be carried out in the absence of a solvent or in the presence of an organic solvent, such as methyl ethyl ketone, toluene, or acetone.

The above-described synthesized dispersion of an aqueous dispersed type polyurethane resin is, for example, impregnated into a fibrous substrate to apply the polyurethane resin to the fibrous substrate. The fibrous substrate is then coagulated and solidified by heat drying. The dispersion applied to the fibrous substrate preferably contains a heat-sensitive coagulant. This is because the coagulant prevents or reduces migration of the polyurethane resin during polyurethane coagulation, which allows the fibrous substrate to be uniformly impregnated with the polyurethane resin.

Examples of heat-sensitive coagulants include inorganic salts such as sodium sulfate, magnesium sulfate, calcium sulfate, calcium chloride, magnesium chloride, and calcium chloride; sodium persulfate; potassium persulfate; and ammonium salts such as ammonium persulfate and ammonium sulfate. After the coagulation temperature of the aqueous dispersed type polyurethane is adjusted by using these coagulants alone or in combination in appropriately selected amounts, the dispersion can be coagulated by heat destabilization.

The heat coagulation temperature of the dispersion is preferably 40 to 90°C, more preferably 50 to 80°C, in terms of storage stability and a touch of processed fiber products.

In addition to the crosslinking agents and the heat-sensitive coagulant described above, the following various additives can be added to the dispersion. Examples of additives include pigments such as carbon black; antioxidants (e.g., hindered phenol, sulfur, and phosphorus antioxidants); UV absorbers (e.g., benzotriazole, triazine, benzophenone, and benzoate UV absorbers); weathering stabilizers such as hindered amine light stabilizers; softening water-repellents (e.g., silicone compounds such as polysiloxane and modified silicone oil, and fluorine compounds such as fluoroalkyl acrylate polymers); wetting agents (e.g., ethylene glycol, diethylene glycol, propylene glycol, and glycerol); antifoaming agents (e.g., octyl alcohol, sorbitan monooleate, polydimethylsiloxane, polyether-modified silicone, and fluorine-modified silicone); fillers (e.g., particulates and hollow beads of calcium carbonate, titanium oxide, silica, talc, ceramics, resins, and the like); flame retardants (halogen, phosphorus, antimony, melamine, guanidine, guanylurea, silicone, and inorganic flame retardants); microballoons (e.g., "Matsumoto Microsphere" [registered trademark] available from Matsumoto Yushi-Seiyaku Co., Ltd.); blowing agents (e.g., organic blowing agents including dinitrosopentamethylenetetramine (e.g., "Cellmic A" [registered trademark] available from Sankyo Kasei Co., Ltd.), azodicarbonamide (e.g., "Cellmic CAP" [registered trademark] available from Sankyo Kasei Co., Ltd.), p,p'-oxybis(benzenesulfonyl hydrazide) (e.g., "Cellmic S" [registered trademark] available from Sankyo Kasei Co., Ltd.), and *N*,*N-*dinitrosopentamethylenetetramine (e.g., "Cellular GX" [registered trademark] available from Eiwa Chemical Ind. Co., Ltd.), and inorganic blowing agents including sodium hydrogen carbonate (e.g., "Cellmic 266" [registered trademark] available from Sankyo Kasei Co., Ltd.); 2,2'-azobis [2-methyl-*N*-(2-hydroxyethyl)propionamide] (e.g., "VA-086" available from Wako Pure Chemical Industries, Ltd.); viscosity modifiers; plasticizers (e.g., phthalic acid esters and adipic acid esters); and release agents (e.g., wax, metallic soap, and mixed release agents).

The dispersion, when impregnated, can be coagulated, for example, by means of dry heating, wet heating, hot water, acids, salts, and infrared coagulation.

After the aqueous dispersed type polyurethane dispersion has been impregnated into the fibrous substrate and coagulated, the coagulation is preferably heated (cured) in order to promote the fusion of the aqueous dispersed type polyurethane emulsion to normalize the molecular structure of the polyurethane resin, thereby improving moist-heat resistance. The curing can be carried out successively to the coagulation after the aqueous dispersed type polyurethane dispersion is impregnated, or can be carried out separately after the aqueous dispersed type polyurethane dispersion is impregnated and coagulated.

To eliminate the need for drying for an excessively long time and prevent accelerated pyrolysis of polyurethane, the heating is preferably carried out at 80°C to 200°C, more preferably at 120°C to 190°C, and still more preferably at 150°C to 180°C. In addition, the heating is preferably carried out for 1 to 60 minutes, more preferably 1 to 30 minutes, in terms of processability. In the present invention, heating at a high temperature for a short time is preferred because such heating increases the flowability of polyurethane molecules, facilitates the aggregation of HS domains in a molecular structure composed of HS domains and SS domains, forms a well-defined microphase-separated structure, and also prevents pyrolysis of the polyurethane molecules.

After the polyurethane resin is applied, the sheet material provided with polyurethane resin is preferably cut in the sheet thickness direction into half or several pieces to increase production efficiency.

Before the napping described below, the sheet material provided with polyurethane resin can be provided with a lubricant such as a silicone emulsion. It is also preferable to provide an antistatic agent before the napping because the antistatic agent prevents dust generated by buffing of the sheet material from settling on sandpaper.

The sheet material can be napped to form raising on the surface of the sheet material. The napping can be carried out by buffing using sandpaper, a roll sander, or the like.

The thickness of the sheet material is preferably about 0.1 to 5.0 mm to prevent a reduction in physical properties, such as tensile strength and tear strength, of the sheet material and keep the touch of the sheet material soft.

The sheet material can be dyed. The dyeing is preferably carried out using a jet dyeing machine because the sheet material can be softened by crumpling while being dyed. Typically, the dyeing temperature is preferably 80°C to 150°C, more preferably 110°C to 130°C, to prevent deterioration of polyurethane and dye the fibers sufficiently.

The dye may be selected depending on the type of fibers constituting the fibrous substrate. For example, disperse dyes can be used for polyester fibers, and acidic dyes, metal complex dyes, and combinations thereof can be used for polyamide fibers. When a disperse dye is used for dyeing, reduction cleaning can be carried out after the dyeing.

It is also preferable to use dyeing auxiliaries during dyeing. Dyeing auxiliaries can improve the uniformity and reproducibility of dyeing. In the same dyeing bath or after the dyeing, the sheet material can be subjected to a finishing treatment using softening agents (e.g., silicone), antistatic agents, water-repellents, flame retardants, light stabilizers, antibacterial agents, and other agents.

### Examples

The sheet material of the present invention and the method of producing the sheet material will now be described in more detail with reference to examples, but these examples are not intended to limit the present invention.

### Evaluation Methods

### (1) Analysis of Microlayer-Separated Structure of Polyurethane

### A. Test Sample

A piece of polyurethane was cut out from a man-made leather, and the piece was cut cross-sectionally using a microtome under freezing conditions to obtain a test sample.

### B. Method of Structural Analysis

Measurements were made using a NanoScopeV Dimension Icon scanning probe microscope (SPM), an AFM available from BrukerAXS, by phase imaging in a tapping mode. A silicon cantilever was used as a measurement probe. The measurements were made at a scan rate of 0.3 to 0.5 Hz in the ambient atmosphere at room temperature (20°C). The measured section was 1 µm² (1 µm × 1 µm, 512 by 512 pixels).

In this method, the phase of vibration of the cantilever during the measurement lags on a soft surface that is highly adhesive and viscous, whereas the phase leads on a hard surface. Since the measurements are made such that areas where the phase leads are brightly displayed, HS domains, which are hard, are brightly displayed, whereas SS domains, which are relatively soft, are darkly displayed.

### C. Method of Image Processing

Under the above-described conditions, the cross-sectional structure of the polyurethane resin was photographed at 25 points with an AFM to obtain microphase-separated structure images. The images each showing a 1 µm² area in the cross-section of the polyurethane resin were processed into JPEG images of 512 by 512 pixels using image processing software (drag and drop image transformation, version: 3.01). The image data were then analyzed using ImageJ image analysis software (version: 1.44p) developed by National Institutes of Health. The image analysis was carried out as follows: the image obtained was converted into an 8-bit gray-scale image using ImageJ; its brightness was expressed by numerical values from 0 (minimum) to 256 (maximum); and then parameter A was calculated as described in Section D below.

### D. Method of Calculating Parameter A

For each of the 25 images obtained as described above each showing a 1 µm² area in the cross-section of the polyurethane resin, brightness distribution of pixel units in a central area of 0.2 µm² (229 by 229 pixels) was taken, and its modal brightness (brightness mode) was determined. From 25 brightness modes of the 25 photograph points, its standard deviation was calculated and evaluated as parameter A.

### (2) Viscoelastic Properties of Polyurethane Resin Film

The storage elastic modulus E' and tanδ were measured using a polyurethane resin film having a thickness of 200 µm with a DMA7100 storage elastic modulus measurement apparatus (Hitachi High-Tech Science Corporation) at a frequency of 12 Hz.

### (3) Martindale Abrasion Evaluation (Durability Evaluation)

Using a Model 406 martindale abrasion tester and an ABRASTIVE CLOTH SM25 standard rubbing cloth (both available from James H. Heal & Co.), a man-made leather sample was rubbed 20,000 times under a load of approximately 12 kPa. The appearance of the man-made leather after rubbing was visually observed and evaluated. The evaluation was made according to the following criteria: grade 5: no change was observed in the appearance of a man-made leather after rubbing; grade 1: large numbers of pills occurred; and grades were classified at intervals of 0.5 between grade 5 and grade 1.

### (4) Appearance of Sheet Material

The appearance of a sheet material was evaluated by twenty evaluators, ten healthy men and ten healthy women, through visual observation and sensory evaluation and rated on the following 5-point scale. The most rate was used as the appearance of the sheet material. Grade 4 and grade 5 were evaluated as good.

Grade 5: Fibers are raised uniformly and dispersed well, and appearance is good.

Grade 4: Between grade 5 and grade 3.

Grade 3: Fibers are dispersed not well at some parts, but fibers are raised and appearance is acceptably good.

Grade 2: Between grade 3 and grade 1.

Grade 1: Fibers are dispersed very badly overall, and appearance is bad.

### (5) Touch (Paper-like Feel) of Sheet Material

The paper-like feel of a sheet material was evaluated by twenty evaluators, ten healthy men and ten healthy women, through sensory evaluation by touch and rated on the following 5-point scale. The most rate was used as the paper-like feel of the sheet material. Grade 4 and grade 5 were evaluated as good (excellent in rubber elasticity).

Grade 5: Wrinkle recovers, and touch is soft.

Grade 4: Between grade 5 and grade 3.

Grade 3: Between grade 4 and grade 3.

Grade 2: Between grade 3 and grade 1.

Grade 1: Sheet is hard and has a texture with a paper-like feel.

### (6) Stress Retention at 10% Elongation

In accordance with JIS L 1913 6.3.1 (2010), the stress at 10% elongation of a sheet before being dyed (gray fabric) was measured using a constant-rate-extension tensile tester at a sample width of 2 cm, a chuck distance of 10 cm, and a tensile speed of 10 cm/min. The measurements were made each at N = 5 when the sheet was dry and when the sheet was wet after being dipped in water at room temperature for 10 minutes. Stress retention at 10% elongation was determined by the equation: stress retention at 10% elongation = wet stress (average of N = 5)/dry stress (average of N = 5) × 100.

### Methods of Preparing Polyurethane Resin Compositions

### Preparation of Polyurethane Resin Composition A (Aqueous)

In a simple pressure reactor equipped with a stirrer, a reflux condenser, and a thermometer, 350 parts by mass of a polycarbonate diol having a number average molecular weight (Mn) of 2,000 ("DURANOL" [registered trademark] T6002 available from ASAHI KASEI CHEMICALS), 7.4 parts by mass of 2,2-dimethylolpropionic acid, 80 parts by mass of TDI, and 200 parts by mass of methyl ethyl ketone (hereinafter also referred to as MEK for short) were placed. The resulting mixture was then heated to 85°C in a dry nitrogen atmosphere and allowed to undergo urethane reaction for 4 hours to give a urethane prepolymer having isocyanate groups. After the reaction solution was cooled, 70 parts by mass of polyoxyethylene nonylphenyl ether, 5.6 parts by mass of triethylamine, and 590 parts by mass of water were added. The resulting mixture was stirred to emulsify to give an aqueous dispersion. To the aqueous dispersion obtained, a solution of 13.0 parts by mass of ethylenediamine in 100 parts of water was added under stirring. The resulting mixture was stirred at 45°C for 1 hour to effect chain extension. Thereafter, MEK was distilled off under reduced pressure to give a polyurethane resin composition A.

### Preparation of Polyurethane Resin Composition B (Aqueous)

In a simple pressure reactor equipped with a stirrer, a reflux condenser, and a thermometer, 350 parts by mass of a polycarbonate diol having a Mn of 2,000 ("DURANOL" [registered trademark] T5652 available from ASAHI KASEI CHEMICALS), 6.5 parts by mass of 2,2-dimethylolpropionic acid, 88 parts by mass of NDI, and 300 parts by mass of MEK were placed. The resulting mixture was then heated to 85°C in a dry nitrogen atmosphere and allowed to undergo urethane reaction for 4 hours to give a urethane prepolymer having isocyanate groups. After the reaction solution was cooled, 70 parts by mass of polyoxyethylene nonylphenyl ether, 4.9 parts by mass of triethylamine, and 600 parts by mass of water were added. The resulting mixture was stirred to emulsify to give an aqueous dispersion. To the aqueous dispersion obtained, a solution of 8.0 parts by mass of ethylenediamine in 52 parts of water was added under stirring. The resulting mixture was stirred at 45°C for 1 hour to effect chain extension. Thereafter, MEK was distilled off under reduced pressure to give a polyurethane resin composition B.

### Preparation of Polyurethane Resin Composition C (Aqueous)

In a simple pressure reactor equipped with a stirrer, a reflux condenser, and a thermometer, 310 parts by mass of a polycarbonate diol having a Mn of 2,000 ("DURANOL" [registered trademark] T5652 available from ASAHI KASEI CHEMICALS), 4.3 parts by mass of 2,2-dimethylolpropionic acid, 94 parts by mass of MDI, and 250 parts by mass of acetone were placed. The resulting mixture was then heated to 85°C in a dry nitrogen atmosphere and allowed to undergo urethane reaction for 4 hours to give a urethane prepolymer having isocyanate groups. After the reaction solution was cooled, 65 parts by mass of polyoxyethylene nonylphenyl ether, 3.2 parts by mass of triethylamine, and 580 parts by mass of water were added. The resulting mixture was stirred to emulsify to give an aqueous dispersion. To the aqueous dispersion obtained, a solution of 4.1 parts by mass of ethylenediamine in 52 parts of water was added under stirring. The resulting mixture was stirred at 45°C for 1 hour to effect chain extension. Thereafter, acetone was distilled off under reduced pressure to give a polyurethane resin composition C.

### Preparation of Polyurethane Resin Composition D (Aqueous)

In a simple pressure reactor equipped with a stirrer, a reflux condenser, and a thermometer, 300 parts by mass of a polycarbonate diol having a Mn of 2,000 ("DURANOL" [registered trademark] T6002 available from ASAHI KASEI CHEMICALS), 6.5 parts by mass of 1,6-hexanediol, 6.0 parts by mass of 2,2-dimethylolpropionic acid, 90 parts by mass of MDI, and 210 parts by mass of acetone were placed. The resulting mixture was then heated to 85°C in a dry nitrogen atmosphere and allowed to undergo urethane reaction for 4 hours to give a urethane prepolymer having isocyanate groups. After the reaction solution was cooled, 65 parts by mass of polyoxyethylene nonylphenyl ether, 4.5 parts by mass of triethylamine, and 530 parts by mass of water were added. The resulting mixture was stirred to emulsify to give an aqueous dispersion. To the aqueous dispersion obtained, a solution of 2.2 parts by mass of ethylenediamine in 100 parts of water was added under stirring. The resulting mixture was stirred at 45°C for 1 hour to effect chain extension. Thereafter, acetone was distilled off under reduced pressure to give a polyurethane resin composition D.

### Preparation of Polyurethane Resin Composition E (Aqueous)

In a simple pressure reactor equipped with a stirrer, a reflux condenser, and a thermometer, 310 parts by mass of a polycarbonate diol having a Mn of 2,000 ("DURANOL" [registered trademark] T4672 available from ASAHI KASEI CHEMICALS), 6.5 parts by mass of 2,2-dimethylolpropionic acid, 100 parts by mass of MDI, and 200 parts by mass of MEK were placed. The resulting mixture was then heated to 85°C in a dry nitrogen atmosphere and allowed to undergo urethane reaction for 4 hours to give a urethane prepolymer having isocyanate groups. After the reaction solution was cooled, 65 parts by mass of polyoxyethylene nonylphenyl ether, 4.9 parts by mass of triethylamine, and 540 parts by mass of water were added. The resulting mixture was stirred to emulsify to give an aqueous dispersion. To the aqueous dispersion obtained, a solution of 4.5 parts by mass of isophoronediamine in 58 parts of water was added under stirring. The resulting mixture was stirred at 45°C for 1 hour to effect chain extension. Thereafter, MEK was distilled off under reduced pressure to give a polyurethane resin composition E.

### Preparation of Polyurethane Resin Composition F (Aqueous)

In a simple pressure reactor equipped with a stirrer, a reflux condenser, and a thermometer, 290 parts by mass of a polyether diol having a Mn of 2,000 (PTMG2000 available from MITSUBISHI CHEMICAL), 6.5 parts by mass of 2,2-dimethylolpropionic acid, 120 parts by mass of MDI, and 170 parts by mass of acetone were placed. The resulting mixture was then heated to 85°C in a dry nitrogen atmosphere and allowed to undergo urethane reaction for 4 hours to give a urethane prepolymer having isocyanate groups. After the reaction solution was cooled, 75 parts by mass of polyoxyethylene nonylphenyl ether, 4.9 parts by mass of triethylamine, and 540 parts by mass of water were added. The resulting mixture was stirred to emulsify to give an aqueous dispersion. To the aqueous dispersion obtained, a solution of 13.0 parts by mass of ethylenediamine in 58 parts of water was added under stirring. The resulting mixture was stirred at 45°C for 1 hour to effect chain extension. Thereafter, acetone was distilled off under reduced pressure to give a polyurethane resin composition F.

### Preparation of Polyurethane Resin Composition G (Aqueous)

In a simple pressure reactor equipped with a stirrer, a reflux condenser, and a thermometer, 310 parts by mass of a polycarbonate diol having a Mn of 2,000 ("DURANOL" [registered trademark] T5652 available from ASAHI KASEI CHEMICALS), 4.3 parts by mass of 2,2-dimethylolpropionic acid, 94 parts by mass of MDI, and toluene 250 parts by mass were placed. The resulting mixture was then heated to 85°C in a dry nitrogen atmosphere and allowed to undergo urethane reaction for 4 hours to give a urethane prepolymer having isocyanate groups. After the reaction solution was cooled, 10 parts by mass of a hindered phenol antioxidant ("IRGANOX1010" available from BASF), 10 parts by mass of a hindered amine light stabilizer ("CHIMASSORB 2020 FDL" available from BASF), 19 parts by mass of a benzotriazole UV absorber ("TINUVIN234" available from BASF), 65 parts by mass of polyoxyethylene nonylphenyl ether, 3.2 parts by mass of triethylamine, and 580 parts by mass of water were added. The resulting mixture was stirred to emulsify to give an aqueous dispersion. To the aqueous dispersion obtained, a solution of 4.1 parts by mass of ethylenediamine in 52 parts of water was added under stirring. The resulting mixture was stirred at 45°C for 1 hour to effect chain extension. Thereafter, toluene was distilled off under reduced pressure to give a polyurethane resin composition G.

### Preparation of Polyurethane Resin Composition H (Aqueous)

The procedure of the polyurethane resin composition D was repeated except that toluene was used in place of MEK as a polyurethane polymerization solvent to give a polyurethane resin composition H.

### Preparation of Polyurethane Resin Composition I (Aqueous)

In a simple pressure reactor equipped with a stirrer, a reflux condenser, and a thermometer, 290 parts by mass of a polyether diol having a Mn of 2,000 (PTMG2000 available from MITSUBISHI CHEMICAL), 6.5 parts by mass of 2,2-dimethylolpropionic acid, 120 parts by mass of MDI, and toluene 170 parts by mass were placed. The resulting mixture was then heated to 85°C in a dry nitrogen atmosphere and allowed to undergo urethane reaction for 4 hours to give a urethane prepolymer having isocyanate groups. After the reaction solution was cooled, 10 parts by mass of a hindered phenol antioxidant (IRGANOX1010 available from BASF), 10 parts by mass of a hindered amine light stabilizer (CHIMASSORB 2020 FDL available from BASF), 19 parts by mass of a benzotriazole UV absorber (TINUVIN234 available from BASF), 75 parts by mass of polyoxyethylene nonylphenyl ether, 4.9 parts by mass of triethylamine, and 540 parts by mass of water were added. The resulting mixture was stirred to emulsify to give an aqueous dispersion. To the aqueous dispersion obtained, a solution of 13.0 parts by mass of ethylenediamine in 58 parts of water was added under stirring. The resulting mixture was stirred at 45°C for 1 hour to effect chain extension. Thereafter, toluene was distilled off under reduced pressure to give a polyurethane resin composition I.

### Preparation of Polyurethane Resin Composition J (Aqueous)

In a simple pressure reactor equipped with a stirrer, a reflux condenser, and a thermometer, 360 parts by mass of a polycarbonate diol having a Mn of 2,000 ("DURANOL" [registered trademark] T6002 available from ASAHI KASEI CHEMICALS), 6.5 parts by mass of 2,2-dimethylolpropionic acid, 80 parts by mass of HDI, and 180 parts by mass of MEK were placed. The resulting mixture was then heated to 85°C in a dry nitrogen atmosphere and allowed to undergo urethane reaction for 4 hours to give a urethane prepolymer having isocyanate groups. After the reaction solution was cooled, 75 parts by mass of polyoxyethylene nonylphenyl ether, 4.9 parts by mass of triethylamine, and 570 parts by mass of water were added. The resulting mixture was stirred to emulsify to give an aqueous dispersion. To the aqueous dispersion obtained, a solution of 1.0 parts by mass of ethylenediamine in 60 parts of water was added under stirring. The resulting mixture was stirred at 45°C for 1 hour to effect chain extension. Thereafter, MEK was distilled off under reduced pressure to give a polyurethane resin composition J.

### Preparation of Polyurethane Resin Composition K (Aqueous)

In a simple pressure reactor equipped with a stirrer, a reflux condenser, and a thermometer, 360 parts by mass of a polycarbonate diol having a Mn of 2,000 ("DURANOL" [registered trademark] T6002 available from ASAHI KASEI CHEMICALS), 6.5 parts by mass of 2,2-dimethylolpropionic acid, 103 parts by mass of IPDI, and 180 parts by mass of MEK were placed. The resulting mixture was then heated to 85°C in a dry nitrogen atmosphere and allowed to undergo urethane reaction for 4 hours to give a urethane prepolymer having isocyanate groups. After the reaction solution was cooled, 45 parts by mass of polyoxyethylene nonylphenyl ether, 4.9 parts by mass of triethylamine, and 570 parts by mass of water were added. The resulting mixture was stirred to emulsify to give an aqueous dispersion. To the aqueous dispersion obtained, a solution of 5.0 parts by mass of isophoronediamine in 38 parts of water was added under stirring. The resulting mixture was stirred at 45°C for 1 hour to effect chain extension. Thereafter, MEK was distilled off under reduced pressure to give a polyurethane resin composition K.

### Preparation of Polyurethane Resin Composition L (Aqueous)

In a simple pressure reactor equipped with a stirrer, a reflux condenser, and a thermometer, 360 parts by mass of a polycarbonate diol having a Mn of 2,000 ("DURANOL" [registered trademark] T6002 available from ASAHI KASEI CHEMICALS), 6.5 parts by mass of 2,2-dimethylolpropionic acid, 120 parts by mass of hydrogenated MDI, and 180 parts by mass of MEK were placed. The resulting mixture was then heated to 85°C in a dry nitrogen atmosphere and allowed to undergo urethane reaction for 4 hours to give a urethane prepolymer having isocyanate groups. After the reaction solution was cooled, 45 parts by mass of polyoxyethylene nonylphenyl ether, 4.9 parts by mass of triethylamine, and 570 parts by mass of water were added. The resulting mixture was stirred to emulsify to give an aqueous dispersion. To the aqueous dispersion obtained, a solution of 5.0 parts by mass of isophoronediamine in 38 parts of water was added under stirring. The resulting mixture was stirred at 45°C for 1 hour to effect chain extension. Thereafter, MEK was distilled off under reduced pressure to give a polyurethane resin composition L.

### Preparation of Polyurethane Resin Composition M (Aqueous)

In a simple pressure reactor equipped with a stirrer, a reflux condenser, and a thermometer, 400 parts by mass of a polyether diol having a Mn of 3,000 (PTMG3000 available from MITSUBISHI CHEMICAL), 6.5 parts by mass of 2,2-dimethylolpropionic acid, 35 parts by mass of HDI, and 160 parts by mass of MEK were placed. The resulting mixture was then heated to 85°C in a dry nitrogen atmosphere and allowed to undergo urethane reaction for 4 hours to give a urethane prepolymer having isocyanate groups. After the reaction solution was cooled, 55 parts by mass of polyoxyethylene nonylphenyl ether, 4.9 parts by mass of triethylamine, and 500 parts by mass of water were added. The resulting mixture was stirred to emulsify to give an aqueous dispersion. To the aqueous dispersion obtained, a solution of 1.0 parts by mass of isophoronediamine in 56 parts of water was added under stirring. The resulting mixture was stirred at 45°C for 1 hour to effect chain extension. Thereafter, MEK was distilled off under reduced pressure to give a polyurethane resin composition M.

Table 1 shows the properties of the polyurethane resin compositions A to I. Table 2 shows the properties of the polyurethane resin compositions J to M.

**[Table 1]**

| | Examples | | | | | | | | |
|---|---|---|---|---|---|---|---|---|---|
| | Resin composition A | Resin composition B | Resin composition C | Resin composition D | Resin composition F | Resin composition F | Resin composition G | Resin composition H | Resin composition I |
| Isocyanate type applied in resin polymerization | TDI | NDI | MDI | MDI | MDI | MDI | MDI | MDI | MDI |
| E' (MPa) (Resin in the form of a dry film) | 33.3 | 25.9 | 17.3 | 19.2 | 20.3 | 16.2 | 17.5 | 19.0 | 16.0 |
| E" (MPa) (Resin in the form of a dry film) | 9.1 | 4.8 | 3.2 | 3.3 | 3.1 | 2.5 | 3.2 | 3.2 | 2.4 |
| tanδ (Resin in the form of a dry film) | 0.27 | 0.19 | 0.18 | 0.17 | 0.15 | 0.15 | 0.18 | 0.17 | 0.15 |

**[Table 2]**

| | Comparative Example | | | |
|---|---|---|---|---|
| | Resin composition J | Resin composition K | Resin composition L | Resin composition M |
| Isocyanate type applied in resin polymerization | HDI | IPDI | Hydrogenerate d MDI | HDI |
| E' (MPa) (Resin in the form of a dry film) | 83.0 | 77.6 | 102.1 | 58.0 |
| E" (MPa) (Resin in the form of a dry film) | 19.0 | 12.3 | 25.2 | 15.9 |
| tanδ (Resin in the form of a dry film) | 0.23 | 0.16 | 0.25 | 0.27 |

### Example 1

Polyethylene terephthalate copolymerized with 8 mol % 5-sodium sulfoisophthalate was used as a sea component, and polyethylene terephthalate was used as an island component. The sea component and the island component were conjugated in a ratio of 20% by mass to 80% by mass to give sea-island type conjugated fibers having 16 islands per filament and an average fiber diameter of 20 µm. The sea-island type conjugated fibers obtained were cut into staple fibers 51 mm in length and passed through a card and a crosslapper to form a fiber web. The fiber web was processed into a nonwoven fabric by needle punching.

The nonwoven fabric thus obtained was shrunk by dipping in hot water at 97°C for 5 minutes, and dried at 100°C for 10 minutes. The resulting nonwoven fabric was then provided with an aqueous solution of a PVA (NM-14 available from Nippon Synthetic Chemical Industry), having a degree of saponification of 99% and a degree of polymerization of 1,400, the aqueous solution being adjusted to have a solid content of 10% by mass. The nonwoven fabric was dried at 100°C for 10 minutes and then additionally heated at 150°C for 20 minutes. The sheet thus obtained was then dipped into an aqueous solution of sodium hydroxide at a concentration of 50 g/L heated to 50°C and treated for 60 minutes to give a dissolved sheet from which the sea component of the sea-island type conjugated fibers was removed. The average fiber diameter of the surface of the dissolved sheet was 4.2 µm. The dissolved sheet was then impregnated with a dispersion of the polyurethane resin composition A adjusted to have a solids concentration of 20%, an active ingredient of a blocked isocyanate ("Erastron" [registered trademark] BN-77 available from Dai-ichi Kogyo Seiyaku) in an amount of 6% based on solid polyurethane, and magnesium sulfate in an amount of 0.4 part by mass based on solid polyurethane. The impregnated sheet was treated in a moist-hot atmosphere at a temperature of 97°C and a humidity of 100% for 5 minutes and then dried at 110°C for 15 minutes to give a sheet provided with aqueous dispersed type polyurethane resin such that the mass of polyurethane based on the mass of the island component of the nonwoven fabric was 35% by mass. The sheet provided with polyurethane resin was dipped in hot water at 98°C for 10 minutes to remove the PVA and then dried at 100°C for 10 minutes. Thereafter, the resulting sheet was further additionally heated at 160°C for 20 minutes.

The dissolved sheet was then cut in half perpendicularly to the thickness direction using a slicer equipped with an endless band knife. The surface opposite to the cut side was napped by buffing with 120-mesh and 240-mesh sandpaper, dyed with a disperse dye using a circular dyeing machine, and then subjected to reduction cleaning, thereby obtaining a man-made leather with a unit weight of 250 g/m². The man-made leather obtained had a good appearance and a touch without a paper-like feel. From the man-made leather, the polyurethane resin was collected and observed under an AFM. The parameter A was 5.8, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 2

The same procedure as in Example 1 was repeated except that the sheet substrate was impregnated with a dispersion of the polyurethane resin composition B adjusted to have a solids concentration of 20%, an active ingredient of a blocked isocyanate ("Erastron" [registered trademark] BN-77 available from Dai-ichi Kogyo Seiyaku) in an amount of 6% based on solid polyurethane, and magnesium sulfate in an amount of 0.3 part by mass based on solid polyurethane, thereby obtaining a man-made leather with a unit weight of 222 g/m². The man-made leather obtained had a good appearance and a touch without a paper-like feel. From the man-made leather, the polyurethane resin was collected and observed under an AFM. The parameter A was 4.2, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 3

The same procedure as in Example 1 was repeated except that the sheet substrate was impregnated with a dispersion of the polyurethane resin composition C adjusted to have a solids concentration of 20%, an active ingredient of a carbodiimide crosslinking agent ("Carbodilite" [registered trademark] V02-L2 available from Nisshinbo Chemical) in an amount of 6% by mass based on solid polyurethane, and magnesium sulfate in an amount of 0.4 part by mass based on solid polyurethane, thereby obtaining a man-made leather with a unit weight of 252 g/m². The man-made leather obtained had a good appearance and a touch without a paper-like feel. From the man-made leather, the polyurethane was collected and observed under an AFM. The parameter A was 2.2, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 4

Polyethylene terephthalate copolymerized with 8 mol % 5-sodium sulfoisophthalate was used as a sea component, and polyethylene terephthalate was used as an island component. The sea component and the island component were conjugated in a ratio of 20% by mass to 80% by mass to give sea-island type conjugated fibers having 16 islands per filament and an average fiber diameter of 20 µm. The sea-island type conjugated fibers obtained were cut into staple fibers 51 mm in length and passed through a card and a crosslapper to form a fiber web. The fiber web was processed into a nonwoven fabric by needle punching.

The nonwoven fabric thus obtained was shrunk by dipping in hot water at 97°C for 5 minutes, and dried at 100°C for 10 minutes. The sheet thus obtained was then dipped into an aqueous solution of sodium hydroxide at a concentration of 10 g/L heated to 95°C and treated for 25 minutes to give a dissolved sheet from which the sea component of the sea-island type conjugated fibers was removed. The average fiber diameter of the surface of the dissolved sheet was 4.2 µm. The resulting nonwoven fabric was then provided with an aqueous solution of a PVA (NM-14 available from Nippon Synthetic Chemical Industry), having a degree of saponification of 99% and a degree of polymerization of 1,400, the aqueous solution being adjusted to have a solid content of 10% by mass. The nonwoven fabric was dried at 100°C for 10 minutes and then additionally heated at 160°C for 10 minutes. The nonwoven fabric was then impregnated with a dispersion of the polyurethane resin composition C adjusted to have a solids concentration of 20%, an active ingredient of an aqueous isocyanate ("Desmodur" [registered trademark] N3900 available from Bayer-Material Science) in an amount of 6% based on solid polyurethane, an active ingredient of a carbodiimide crosslinking agent ("Carbodilite" [registered trademark] V02-L2 available from Nisshinbo Chemical) in an amount of 7% based on solid polyurethane, and magnesium sulfate in an amount of 0.3 part by mass based on solid polyurethane. The impregnated nonwoven fabric was treated in a moist-hot atmosphere at a temperature of 97°C and a humidity of 100% for 5 minutes and then dried at 110°C for 15 minutes to give a sheet provided with aqueous dispersed type polyurethane resin such that the mass of polyurethane based on the mass of the island component of the nonwoven fabric was 35% by mass. After that, the same procedure as in Example 1 was repeated to obtain a man-made leather with a unit weight of 219 g/m². The man-made leather obtained had a good appearance and a touch without a paper-like feel. From the man-made leather, the polyurethane resin was collected and observed under an AFM. The parameter A was 2.5, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 5

The same procedure as in Example 1 was repeated except that the sheet substrate was impregnated with a dispersion of the polyurethane resin composition C adjusted to have a solids concentration of 20%, an active ingredient of an aqueous isocyanate ("Desmodur" [registered trademark] N3900 available from Bayer-Material Science) in an amount of 6% based on solid polyurethane, an active ingredient of a carbodiimide crosslinking agent ("Carbodilite" [registered trademark] V02-L2 available from Nisshinbo Chemical) in an amount of 7% based on solid polyurethane, and magnesium sulfate in an amount of 0.1 part by mass based on solid polyurethane, thereby obtaining a man-made leather with a unit weight of 251 g/m². The man-made leather obtained had a good appearance and a touch without a paper-like feel. From the man-made leather, the polyurethane resin was collected and observed under an AFM. The parameter A was 2.2, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 6

The same procedure as in Example 5 was repeated except that the sea-island conjugated fibers of Example 1 were passed through a card and a crosslapper to form fiber webs, and after the fiber webs were laminated, a woven fabric with 96 ends and 76 picks per inch made of a warp yarn and a weft yarn both having a fineness of 84 dtex and 72 filaments was superposed on both surfaces of the fiber web laminate, after which the laminate was processed into a nonwoven fabric laminate by needle punching; and the aqueous dispersed type polyurethane resin was provided such that the mass of polyurethane based on the mass of the island component of the nonwoven fabric was 28% by mass, thereby obtaining a man-made leather with a unit weight of 398 g/m². The man-made leather obtained had a good appearance and a touch without a paper-like feel. From the man-made leather, the polyurethane resin was collected and observed under an AFM. The parameter A was 2.4, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 7

The nonwoven fabric obtained in Example 1 was shrunk by dipping in hot water at 97°C and dried at 100°C for 5 minutes to give a sheet. The sheet was then dipped into an aqueous solution of sodium hydroxide at a concentration of 5 g/L heated to 95°C and treated for 25 minutes to give a dissolved sheet from which the sea component of the sea-island type conjugated fiber was removed. The average fiber diameter of the surface of the dissolved sheet was 4.2 µm. The dissolved sheet was then impregnated with a dispersion of the polyurethane resin composition C adjusted to have a solids concentration of 20%, an active ingredient of an aqueous isocyanate ("Desmodur" [registered trademark] N3900 available from Bayer-Material Science) in an amount of 6% based on solid polyurethane, an active ingredient of a carbodiimide crosslinking agent ("Carbodilite" [registered trademark] V02-L2 available from Nisshinbo Chemical) in an amount of 7% based on solid polyurethane, magnesium sulfate in an amount of 0.1 part by mass based on solid polyurethane, and sodium hydrogen carbonate ("Cellmic" [registered trademark] 266 available from Sankyo Kasei Co., Ltd.) in an amount of 3 parts by mass based on solid polyurethane resin. The impregnated sheet was treated in a moist-hot atmosphere at a temperature of 97°C and a humidity of 100% for 5 minutes and then hot-air dried at a drying temperature of 110°C for 15 minutes to give a sheet provided with aqueous dispersed type polyurethane resin such that the mass of polyurethane resin based on the mass of the island component of the dissolved sheet was 35% by mass. The sheet obtained was additionally heated at 160°C for 15 minutes and then cut in half perpendicularly to the thickness direction using a slicer equipped with an endless band knife. The surface opposite to the cut side was napped by buffing with 120-mesh and 240-mesh sandpaper, dyed with a disperse dye using a circular dyeing machine, and then subjected to reduction cleaning, thereby obtaining a man-made leather with a unit weight of 236 g/m². The man-made leather obtained had a good appearance and a touch without a paper-like feel. From the man-made leather, the polyurethane resin was collected and observed under an AFM. The parameter A was 2.0, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 8

The same procedure as in Example 1 was repeated except that the sheet substrate was impregnated with a solution of the polyurethane resin composition C adjusted to have a solids concentration of 20% and magnesium sulfate in an amount of 0.1 part by mass based on solid polyurethane, thereby obtaining a man-made leather with a unit weight of 221 g/m². The man-made leather obtained had a good appearance and a touch without a paper-like feel. From the man-made leather, the polyurethane resin was collected and observed under an AFM. The parameter A was 1.9, and the polyurethane resin had a microphase-separated structure with HS domains and SS domains finely dispersed.

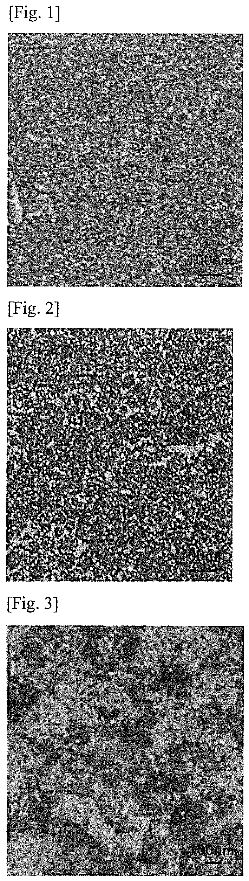

FIG. 1 is an AFM micrograph of the microphase-separated structure of the polyurethane resin extracted from the man-made leather obtained in Example 8 of the present invention. In FIG. 1, a microphase-separated structure in which spherical HS domains mainly having a size of 100 nm or smaller are dispersed in uniform SS domains is observed, which structure is not observed in FIG. 3.

### Example 9

The same procedure as in Example 1 was repeated except that the sheet substrate was impregnated with a dispersion of the polyurethane resin composition D adjusted to have a solids concentration of 20%, an active ingredient of a carbodiimide crosslinking agent ("Carbodilite" [registered trademark] V02-L2 available from Nisshinbo Chemical) in an amount of 6% based on solid polyurethane, and magnesium sulfate in an amount of 0.5 part by mass based on solid polyurethane, thereby obtaining a man-made leather with a unit weight of 215 g/m². The man-made leather obtained had a good appearance and a touch without a paper-like feel. From the man-made leather, the polyurethane resin was collected and observed under an AFM. The parameter A was 3.5, and the polyurethane resin had a microphase-separated structure with HS domains and SS domains finely dispersed.

In the microphase-separated structure observed, spherical HS domains mainly having a size of 100 nm or smaller were dispersed in uniform SS domains.

### Example 10

The same procedure as in Example 1 was repeated except that the sheet substrate was impregnated with a dispersion of the polyurethane resin composition E adjusted to have a solids concentration of 20%, an active ingredient of a blocked isocyanate ("Erastron" [registered trademark] BN-77 available from Dai-ichi Kogyo Seiyaku) in an amount of 6% based on solid polyurethane, an active ingredient of a carbodiimide crosslinking agent ("Carbodilite" [registered trademark] V02-L2 available from Nisshinbo Chemical) in an amount of 7% based on solid polyurethane, and magnesium sulfate in an amount of 0.5 part by mass based on solid polyurethane, thereby obtaining a man-made leather with a unit weight of 215 g/m². The man-made leather obtained had a good appearance and a touch without a paper-like feel. From the man-made leather, the polyurethane resin was collected and observed under an AFM. The parameter A was 2.8, and the polyurethane resin had a microphase-separated structure with HS domains and SS domains finely dispersed. In the microphase-separated structure observed, spherical HS domains mainly having a size of 100 nm or smaller were dispersed in uniform SS domains.

### Example 11

The same procedure as in Example 1 was repeated except that the sheet substrate was impregnated with a dispersion of the polyurethane resin composition F adjusted to have a solids concentration of 20%, an active ingredient of a blocked isocyanate ("Erastron" [registered trademark] BN-77 available from Dai-ichi Kogyo Seiyaku) in an amount of 6% based on solid polyurethane, an active ingredient of a carbodiimide crosslinking agent ("Carbodilite" [registered trademark] V02-L2 available from Nisshinbo Chemical) in an amount of 5% based on solid polyurethane, and magnesium sulfate in an amount of 0.6 part by mass based on solid polyurethane, thereby obtaining a man-made leather with a unit weight of 227 g/m². The man-made leather obtained had a good appearance and a touch without a paper-like feel. From the man-made leather, the polyurethane resin was collected and observed under an AFM. The parameter A was 3.2, and the polyurethane resin had a microphase-separated structure with HS domains and SS domains finely dispersed. In the microphase-separated structure observed, spherical HS domains mainly having a size of 100 nm or smaller were dispersed in uniform SS domains.

The results of Examples 1 to 11 are shown in Table 3.

**[Table 3]**

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| Resin composition | A | B | C | C | C | C | C | C | D | E | F |
| Parameter A | 5,8 | 4,2 | 2,2 | 2,5 | 2,2 | 2,4 | 2,0 | 1,9 | 3,5 | 2,8 | 3,2 |
| A sense of paper-like | 4 | 4 | 4 | 4 | 5 | 5 | 4 | 4 | 5 | 5 | 5 |
| Appearance grade | 4 | 4 | 4 | 5 | 5 | 5 | 4 | 4 | 4 | 5 | 4 |
| Stress Retention at 10% Elongation of Gray Fabric (%) | 71 | 72 | 74 | 85 | 83 | 82 | 76 | 70 | 75 | 79 | 78 |

### Example 12

The same procedure as in Example 5 was repeated except that the polyurethane resin composition G was used as a polyurethane resin, thereby obtaining a man-made leather with a unit weight of 248 g/m². The man-made leather obtained had a good appearance and a touch without a paper-like feel. From the man-made leather, the polyurethane resin was collected and observed under an AFM. The parameter A was 2.3, and the polyurethane resin had a microphase-separated structure with HS domains and SS domains finely dispersed. In the microphase-separated structure observed, spherical HS domains mainly having a size of 100 nm or smaller were uniformly dispersed in uniform SS domains.

### Example 13

The same procedure as in Example 6 was repeated except that the polyurethane resin composition G was used as a polyurethane resin, thereby obtaining a man-made leather with a unit weight of 390 g/m². The man-made leather obtained had a good appearance and a touch without a paper-like feel. From the man-made leather, the polyurethane resin was collected and observed under an AFM. The parameter A was 2.2, and the polyurethane resin had a microphase-separated structure with HS domains and SS domains finely dispersed. In the microphase-separated structure observed, spherical HS domains mainly having a size of 100 nm or smaller were uniformly dispersed in uniform SS domains.

### Example 14

The same procedure as in Example 7 was repeated except that the polyurethane resin composition G was used as a polyurethane resin, thereby obtaining a man-made leather with a unit weight of 257 g/m². The man-made leather obtained had a good appearance and a touch without a paper-like feel. From the man-made leather, the polyurethane resin was collected and observed under an AFM. The parameter A was 2.1, and the polyurethane resin had a microphase-separated structure with HS domains and SS domains finely dispersed. In the microphase-separated structure observed, spherical HS domains mainly having a size of 100 nm or smaller were uniformly dispersed in uniform SS domains.

### Example 15

The same procedure as in Example 1 was repeated except that the polyurethane resin composition G was used as a polyurethane resin, and the sheet substrate was impregnated with a solution of the polyurethane resin composition G, magnesium sulfate in an amount of 0.1 part by mass based on solid polyurethane, and an active ingredient of a carbodiimide crosslinking agent ("Carbodilite" [registered trademark] V02-L2 available from Nisshinbo Chemical) in an amount of 4% based on solid polyurethane, thereby obtaining a man-made leather with a unit weight of 229 g/m². The man-made leather obtained had a good appearance and a touch without a paper-like feel. From the man-made leather, the polyurethane resin was collected and observed under an AFM. The parameter A was 2.0, and the polyurethane resin had a microphase-separated structure with HS domains and SS domains finely dispersed.

FIG. 2 is an AFM micrograph of the microphase-separated structure of the polyurethane resin extracted from the man-made leather obtained in Example 15 of the present invention. In FIG. 2, a microphase-separated structure in which spherical HS domains mainly having a size of 100 nm or smaller are uniformly dispersed is observed, which structure is not observed in FIG. 3. In the microphase-separated structure observed, spherical HS domains mainly having a size of 100 nm or smaller are uniformly dispersed in uniform SS domains.

### Example 16

The same procedure as in Example 9 was repeated except that the polyurethane resin composition H was used as a polyurethane resin, thereby obtaining a man-made leather with a unit weight of 238 g/m². The man-made leather obtained had a good appearance and a touch without a paper-like feel. From the man-made leather, the polyurethane resin was collected and observed under an AFM. The parameter A was 3.8, and the polyurethane resin had a microphase-separated structure with HS domains and SS domains finely dispersed. In the microphase-separated structure observed, spherical HS domains mainly having a size of 100 nm or smaller were uniformly dispersed in uniform SS domains.

### Example 17

The same procedure as in Example 11 was repeated except that the polyurethane resin composition J was used as a polyurethane resin, thereby obtaining a man-made leather with a unit weight of 240 g/m². The man-made leather obtained had a good appearance and a touch without a paper-like feel. From the man-made leather, the polyurethane resin was collected and observed under an AFM. The parameter A was 3.1, and the polyurethane resin had a microphase-separated structure with HS domains and SS domains finely dispersed. In the microphase-separated structure observed, spherical HS domains mainly having a size of 100 nm or smaller were uniformly dispersed in uniform SS domains.

The results of Examples 12 to 17 are shown in Table 4.

**[Table 4]**

| | Example 12 | Example 13 | Example 14 | Example 15 | Example 16 | Example 17 | Comparative Example 1 | Comparative Example 2 | Comparative Example 3 | Comparative Example 4 | Comparative Example 5 |
|---|---|---|---|---|---|---|---|---|---|---|---|
| Resin composition | G | G | G | G | G | I | J | J | K | L | M |
| Parameter A | 2,3 | 2,2 | 2,1 | 2.0 | 3,8 | 3,1 | 12,3 | 12,1 | 14,2 | 13,3 | 15,8 |
| A sense of paper-like | 5 | 5 | 4 | 5 | 5 | 5 | 2 | 1 | 2 | 2 | 3 |
| Appearance grade | 5 | 5 | 4 | 4,5 | 4,5 | 4,5 | 3 | 3 | 3 | 3 | 3 |
| Stress Retention at 10% Elongation of Gray Fabric (%) | 82 | 83 | 78 | 81 | 80 | 76 | 43 | 50 | 52 | 48 | 46 |

### Comparative Example 1

The same procedure as in Example 4 was repeated except that the polyurethane resin composition J was used as a polyurethane resin; the sheet substrate was impregnated with a dispersion of the polyurethane resin composition J and magnesium sulfate in an amount of 0.8 part by mass based on solid polyurethane; and additional heating after polyurethane was provided was not performed, thereby obtaining a man-made leather with a unit weight of 237 g/m². The man-made leather obtained had a relatively uniform appearance but had a touch with a strong paper-like feel. From the man-made leather, the polyurethane resin was collected and observed under an AFM. The parameter A was 12.3, and the polyurethane resin had a microphase-separated structure in which HS domains and SS domains were ill-defined.

### Comparative Example 2

The same procedure as in Example 7 was repeated except that the polyurethane resin composition J was used as a polyurethane resin; the sheet substrate was impregnated with a dispersion of the polyurethane resin composition J and magnesium sulfate in an amount of 0.8 part by mass based on solid polyurethane; and additional heating after polyurethane was provided was not performed, thereby obtaining a man-made leather with a unit weight of 202 g/m². The man-made leather obtained had a relatively uniform appearance but had a touch with a strong paper-like feel. From the man-made leather, the polyurethane resin was collected and observed under an AFM. The parameter A was 12.1, and the polyurethane resin had a microphase-separated structure in which HS domains and SS domains were ill-defined.

FIG. 3 is an AFM micrograph of the microphase-separated structure of the polyurethane extracted from the man-made leather obtained in Comparative Example 2. In FIG. 3, unlike FIG. 1, spherical HS domains having a size of some tens of nanometers are not observed, and HS domains are ununiformly dispersed.

### Comparative Example 3

The same procedure as in Comparative Example 2 was repeated except that the polyurethane resin composition K was used as a polyurethane resin, and the sheet substrate was impregnated with a dispersion of the polyurethane resin composition K and magnesium sulfate in an amount of 0.9 part by mass based on solid polyurethane, thereby obtaining a man-made leather with a unit weight of 212 g/m². The man-made leather obtained had a relatively uniform appearance but had a touch with a strong paper-like feel. From the man-made leather, the polyurethane resin was collected and observed under an AFM. The parameter A was 14.2, and the polyurethane resin had a microphase-separated structure in which HS domains and SS domains were ill-defined.

### Comparative Example 4

The same procedure as in Comparative Example 2 was repeated except that the polyurethane resin composition L was used as a polyurethane resin, and the sheet substrate was impregnated with a dispersion of the polyurethane resin composition L and magnesium sulfate in an amount of 0.6 part by mass based on solid polyurethane, thereby obtaining a man-made leather with a unit weight of 243 g/m². The man-made leather obtained had a relatively uniform appearance but had a touch with a strong paper-like feel. From the man-made leather, the polyurethane resin was collected and observed under an AFM. The parameter A was 13.3, and the polyurethane resin had a microphase-separated structure in which HS domains and SS domains were ill-defined.

### Comparative Example 5

The same procedure as in Example 2 was repeated except that the polyurethane resin composition M was used as a polyurethane resin; the sheet substrate was impregnated with a dispersion of the polyurethane resin composition M and magnesium sulfate in an amount of 1.2 parts by mass based on solid polyurethane; and additional heating at 160°C for 20 minutes was not performed after the removal of PVA and the subsequent drying at 100°C for 10 minutes, thereby obtaining a man-made leather with a unit weight of 233 g/m². The man-made leather obtained had a relatively uniform appearance but had a touch with a somewhat paper-like feel. From the man-made leather, the polyurethane resin was collected and observed under an AFM. The parameter A was 15.8, and the polyurethane resin had a microphase-separated structure in which HS domains and SS domains were ill-defined.

The results of Comparative Examples 1 to 5 are shown in Table 4.

### Industrial Applicability

The sheet material according to the present invention is used mainly as a man-made leather and suitable for use as, for example, interior materials having very elegant appearances, such as facing materials of furnishings, chairs, wallings, and seats, ceilings, and interiors in compartments of vehicles such as automobiles, trains, and aircraft; clothing materials used for shirts, jackets, uppers and trims of shoes such as casual shoes, sports shoes, men's shoes, and women's shoes, bags, belts, wallets, and parts thereof; and industrial materials such as wiping cloths, polishing cloths, and compact-disk curtains.

## Claims

1. A sheet material comprising:
a fibrous substrate comprising microfibers; and
a hydrophilic-group-containing polyurethane resin comprising an aromatic polyisocyanate, **characterized in that**
the hydrophilic-group-containing polyurethane resin is a polyurethane resin crosslinked with a crosslinking agent applied to the fibrous substrate, the hydrophilic-group-containing polyurethane resin having a microphase-separated structure consisting in hard segment domains composed mainly of urethane bonds and urea bonds and soft segment domains composed mainly of polymeric polyols, wherein the crosslinking agent is at least one of a polyisocyanate crosslinking agent and a carbodiimide crosslinking agent.

2. A method for producing the sheet material of claim 1, the method comprising:
impregnating a dispersion into a fibrous substrate comprising microfibers, the dispersion comprising a crosslinking agent and an aqueous dispersed type polyurethane resin comprising an aromatic polyisocyanate, wherein the crosslinking agent is at least one of a polyisocyanate crosslinking agent and a carbodiimide crosslinking agent; and
coagulating the dispersion by heat drying.

3. The method for producing a sheet material according to claim 2, further comprising heating the impregnated and coagulated dispersion at 80°C to 200°C after the dispersion is impregnated and coagulated by heat drying.

4. The method for producing a sheet material according to claim 2 or 3, further comprising applying a highly saponified polyvinyl alcohol having a degree of saponification of 95% to 100% to the fibrous substrate comprising microfibers before the dispersion is impregnated and coagulated by heat drying.

## Patentansprüche

1. Flächengebildematerial umfassend:
ein faseriges Substrat umfassend Mikrofasern, und
ein hydrophiler Rest enthaltendes Polyurethanharz umfassend ein aromatisches Polyisocyanat, **dadurch gekennzeichnet, dass**
das hydrophiler Rest enthaltende Polyurethanharz ein Polyurethanharz vernetzt mit einem Vernetzungsmittel aufgebracht auf das faserige Substrat ist, wobei das hydrophiler Rest enthaltende Polyurethanharz eine Mikrophasen-separierte Struktur bestehend in Hartsegmentdomänen hauptsächlich zusammengesetzt aus Urethanbindungen und Harnstoffbindungen und Weichsegmentdomänen hauptsächlich zusammensetzt aus polymeren Polyolen aufweist, wobei das Vernetzungsmittel mindestens eines von einem Polyisocyanat-Vernetzungsmittel und einem Carbodiimid-Vernetzungsmittel ist.

2. Verfahren zum Herstellen des Flächengebildematerials nach Anspruch 1, wobei das Verfahren umfasst:
Imprägnieren einer Dispersion in ein faseriges Substrat umfassend Mikrofasern, wobei die Dispersion ein Vernetzungsmittel und ein Polyurethanharz vom Typ wässrig dispergiert umfassend ein aromatisches Polyisocyanat umfasst, wobei das Vernetzungsmittel mindestens eines von einem Polyisocyanat-Vernetzungsmittel und einem Carbodiimid-Vernetzungsmittel ist; und
Koagulieren der Dispersion durch Wärmetrocknen.

3. Verfahren zum Herstellen eines Flächengebildematerials gemäß Anspruch 2, ferner umfassend Erwärmen der imprägnierten und koagulierten Dispersion bei 80°C bis 200°C, nachdem die Dispersion durch Wärmetrocknen imprägniert und koaguliert wurde.

4. Verfahren zum Herstellen eines Flächengebildematerials gemäß Anspruch 2 oder 3, ferner umfassend Aufbringen eines stark verseiften Polyvinylalkohols mit einem Verseifungsgrad von 95 % bis 100 % auf das faserige Substrat umfassend Mikrofasern, bevor die Dispersion durch Wärmetrocknen imprägniert und koaguliert wird.

## Revendications

1. Matériau en feuille comprenant :
un substrat fibreux comprenant des microfibres ; et
une résine polyuréthane contenant un groupe hydrophile comprenant un polyisocyanate aromatique, **caractérisé en ce que**
la résine polyuréthane contenant un groupe hydrophile est une résine polyuréthane réticulée avec un agent de réticulation appliqué au substrat fibreux, la résine polyuréthane contenant un groupe hydrophile ayant une structure séparée en microphases constituée de domaines de segments durs composés principalement de liaisons uréthane et de liaisons urée et de domaines de segments souples composés principalement de polyols polymères, où l'agent de réticulation est au moins l'un parmi un agent de réticulation polyisocyanate et un agent de réticulation carbodiimide.

2. Procédé de production du matériau en feuille de la revendication 1, le procédé comprenant :
l'imprégnation d'une dispersion dans un substrat fibreux comprenant des microfibres, la dispersion comprenant un agent de réticulation et une résine polyuréthane de type dispersée aqueuse comprenant un polyisocyanate aromatique, où l'agent de réticulation est au moins l'un parmi un agent de réticulation polyisocyanate et un agent de réticulation carbodiimide ; et
la coagulation de la dispersion par séchage thermique.

3. Procédé de production d'un matériau en feuille selon la revendication 2, comprenant en outre le chauffage de la dispersion imprégnée et coagulée à une température entre 80°C et 200°C après que la dispersion est imprégnée et coagulée par séchage thermique.

4. Procédé de production d'un matériau en feuille selon la revendication 2 ou 3, comprenant en outre l'application d'un alcool polyvinylique hautement saponifié ayant un degré de saponification de 95% à 100% au substrat fibreux comprenant des microfibres avant que la dispersion ne soit imprégnée et coagulée par séchage thermique.
